# EUROPÄISCHE PATENTANMELDUNG

(11) **EP 2 540 536 A1**
(43) Veröffentlichungstag der Anmeldung: **02.01.2013**
(21) Anmeldenummer: 12172209.4
(22) Anmeldetag: 15.06.2012
(51) Int. Cl.: B60G 17/052, B60G 17/056

(54) **Niveauregelventileinheit**

(30) Priorität: 01.07.2011 DE 102011051505
(71) Anmelder: Haldex Brake Products GmbH, 69123 Heidelberg (DE)
(72) Erfinder: Sulzyc, Georg, 68535 Edingen-Neckarhausen (DE); Becke, Stefan, 68804 Altlussheim (DE); Nöcker, Joachim, 69412 Eberbach (DE); Tschöke, Tobias, 69121 Heidelberg (DE)
(74) Vertreter: Rehberg Hüppe + Partner

(57) **Zusammenfassung**

Die Erfindung betrifft eine Niveauregelventileinheit (8).

In der erfindungsgemäßen Niveauregelventileinheit (8) ist mindestens ein Versorgungsanschluss vorgesehen, mit welchem die Niveauregelventileinheit (8) mit Druckluft versorgt wird. Dieser kann unmittelbar mit einem Vorratsbehälter (3) verbunden sein und/oder unter Zwischenschaltung einer Hebe-Senk-Ventileinheit (9) mit dem Vorratsbehälter (3) verbunden sein. Darüber hinaus ist in der erfindungsgemäßen Niveauregelventileinheit mindestens ein elektrischer Anschluss (17; 18; 25) vorgesehen, über welchen mindestens ein Steuersignal für eine rein elektrische Niveauregelung übertragen wird. In der Niveauregelventileinheit ist mindestens ein elektrisch angesteuertes oder vorgesteuertes Ventil (28, 29; 39, 40) vorhanden. In die Niveauregelventileinheit (8) ist ein Verteiler (20a; 20b) integriert zur Weitergabe der Druckluft an die Luftfederbälge (2) unterschiedlicher Achsen.

## Beschreibung

### TECHNISCHES GEBIET DER ERFINDUNG

Die Erfindung betrifft eine Niveauregelventileinheit für eine Luftfederungsanlage eines Nutzfahrzeugs, insbesondere eines Zugfahrzeugs und/oder eines Anhängers, sowie eine Luftfederungsanlage mit einer derartigen Niveauregelventileinheit.

### STAND DER TECHNIK

EP 2 059 423 B1 offenbart eine Druckluftanlage eines Anhängers mit Kupplungsköpfen Vorrat und Bremse, einem Anhängerbremsventil mit integriertem Parkventil und Löseventil, einem Modulator, einem der Bremsanlage zugeordneten Vorratsbehälter und Kombi-Federspeicherbremszylindern. Ebenfalls über den Kupplungskopf Vorrat gespeist wird ein Vorratsbehälter für eine Luftfederungsanlage. Dieser Vorratsbehälter ist über ein automatisches, mechanisch entsprechend einer Niveauänderung betätigtes Niveauregelventil und ein manuell zum Heben und Senken des Fahrzeugaufbaus vom Fahrer betätigbares Hebe-Senk-Ventil mit Luftfederbälgen verbunden. Hierbei sind die Luftfederbälge unterschiedlicher Seiten des Anhängers jeweils einem Kreis zugeordnet mit einer gemeinsamen Kreisleitung von dem Hebe-Senk-Ventil, von welcher dann in der Nähe der dem Kreis zugeordneten Luftfederbälge Stichleitungen abzweigen. In der Luftfederungsanlage wird Druckluft von dem Vorratsbehälter über ein T-Stück über parallele Leitungszweige einerseits unmittelbar und andererseits über das Niveauregelventil dem Hebe-Senk-Ventil zugeführt. Die Druckschrift schlägt vor, dieses stromaufwärts des Hebe-Senk-Ventils angeordnete T-Stück in ein pneumatisches Modul zu integrieren, von welchem dann als sogenannte Punkt-Zu-Punkt-Verbindungen Komponenten der Luftfederungsanlage, nämlich das Niveauregelventil, das Hebe-Senk-Ventil und unter Umständen ein zusätzliches Liftachsventil mit Druckluft versorgt werden. Hierdurch soll der gesamte Verrohrungsaufwand bei der Herstellung des Anhängers vereinfacht werden, wodurch einerseits Kosten aufgrund der nicht mehr benötigten T-Stücke und Fehlerquellen, z. B. durch undichte Anschlüsse an den T-Stücken, vermieden werden sollen.

Gemäß EP 2 125 398 B1 erfolgt in einer Luftfederungsanlage eine automatische mechanische Niveauregelung durch ein Niveauregelventil, welchem eine manuell betätigbare Hebe-Senk-Ventileinheit in Strömungsrichtung zu den Luftfederbälgen nachgeordnet ist. Die Hebe-Senk-Ventileinheit besitzt einen Versorgungsanschluss, welcher unmittelbar aus einem der Luftfederungsanlage zugeordneten Vorratsbehälter gespeist wird, sowie einen Versorgungsanschluss, welcher von dem Vorratsbehälter unter Zwischenschaltung des Niveauregelventils mit Druckluft versorgt wird. Die Hebe-Senk-Ventileinheit ist hier mit zwei Ventilbaugruppen gebildet, nämlich einer Handsteuergruppe, in welcher lediglich zwei 2/2-Wegeventile mit manuellen Betätigungsknöpfen angeordnet sind, sowie einer Hebe-Senk-Ventilgruppe. Die Hebe-Senk-Ventilgruppe ermöglicht zwei unterschiedliche Betriebsweisen: Im Fahrbetrieb und für aktivierte mechanische Niveauregelung verbindet die Hebe-Senk-Ventilgruppe die Luftfederbälge über ein 2/2-Wegeventil in Durchlassstellung mit dem mechanischen Niveauregelventil. Hingegen sperrt das genannte 2/2-Wegeventil für eine manuelle Betätigung der Handsteuergruppe die Verbindung zwischen den Luftfederbälgen und dem mechanischen Niveauregelventil. Stattdessen erfolgt je nach manueller Betätigung der Handsteuergruppe über die Hebe-Senk-Ventilgruppe eine Be- und Entlüftung der Luftfederbälge zum manuell herbeigeführten Heben und Senken der Luftfederbälge. Ausführungsbeispiele der Druckschrift betreffen sowohl eine einkreisige als auch eine zweikreisige Luftfederungsanlage, wobei in jedem Fall die Hebe-Senk-Ventilgruppe in diese integrierte Verteiler besitzt mit Anschlüssen, die jeweils mit zugeordneten Luftfederbälgen verbunden sind. Die Druckschrift schlägt auch vor, das Niveauregelventil und die Hebe-Senk-Ventilgruppe in eine Baueinheit zu integrieren, um die Herstellungs- und Installationskosten zu senken.

Aus der nicht vorveröffentlichten Patentanmeldung DE 10 2010 003 463.0-21 ist eine Luftfederungsanlage bekannt, bei welcher eine Druckluftquelle über ein mechanisches Niveauregelventil, ein Hebe-Senk-Ventil, ein Schnellentlüftungsventil, ein Überströmventil und mehrere Verteiler mit Luftfederbälgen verbunden ist. Hierbei sind das Schnellentlüftungsventil, das Überströmventil und die Verteiler in eine gemeinsame Baueinheit integriert.

### AUFGABE DER ERFINDUNG

Der Erfindung liegt die Aufgabe zugrunde, eine verbesserte kompakte Niveauregelventileinheit sowie eine Luftfederungsanlage mit einer kompakten Niveauregelventileinheit vorzuschlagen.

### LÖSUNG

Die Aufgabe der Erfindung wird erfindungsgemäß mit einer Niveauregelventileinheit mit den Merkmalen des unabhängigen Patentanspruchs 1 gelöst. Weitere Ausgestaltungen einer erfindungsgemäßen Niveauregelventileinheit ergeben sich entsprechend den abhängigen Patentansprüchen 2 bis 14. Eine weitere Lösung der der Erfindung zugrunde liegenden Aufgabe ist gegeben durch eine Luftfederungsanlage mit den Merkmalen des nebengeordneten Patentanspruchs 15. Weitere Ausgestaltungen einer derartigen Luftfederungsanlage sind durch die Merkmale der abhängigen Patentansprüche 16 und 17 gekennzeichnet.

### BESCHREIBUNG DER ERFINDUNG

Die erfindungsgemäße Niveauregelventileinheit findet Einsatz für eine Luftfederungsanlage eines Nutzfahrzeugs, insbesondere eines Zugfahrzeugs und/oder eines Anhängers. Die Niveauregelventileinheit besitzt (mindestens) einen Versorgungsanschluss. Der Versorgungsanschluss dient hierbei der Zufuhr von Druckluft aus einer Druckluftquelle, insbesondere einem Vorratsbehälter, was durch unmittelbare Verbindung des Versorgungsanschlusses mit der Druckluftquelle oder durch mittelbare Verbindung, insbesondere über eine Hebe-Senk-Ventileinheit, erfolgen kann.

Die erfindungsgemäße Niveauregelventileinheit besitzt mindestens einen elektrischen Anschluss, über welchen mindestens ein Steuersignal übertragen werden kann. Das Steuersignal wird in der Niveauregelventileinheit verwendet für eine rein elektrisch gesteuerte Niveauregelung (also keine mechanisch gesteuerte Niveauregelung), so dass je nach einem elektrischen Steuersignal die Niveauregelventileinheit ein Niveau der von der Niveauregelventileinheit angesteuerten Luftfederbälge anheben oder absenken oder dieses konstant halten kann. Im Rahmen der vorliegenden Erfindung kann ein beliebiger Anschluss eingesetzt werden, sofern dieser geeignet ist, das genannte elektrische Steuersignal zu übertragen. Hierbei kann es sich um eine einzige Leitung handeln, mit welcher auch unterschiedliche Steuersignale übertragbar sind, ein biaxiales Kabel, einen Anschluss an ein CAN oder anderweitiges Bussystem, um nur einige Beispiele zu nennen. Ebenfalls denkbar ist, dass über den elektrischen Anschluss nicht nur das Steuersignal für die rein elektrische Niveauregelung, sondern auch anderweitige Steuersignale oder ein Versorgungssignal zur elektrischen Leistungsversorgung übertragen wird.

Um die rein elektrische Niveauregelung entsprechend dem zuvor erläuterten elektrischen Steuersignal zu ermöglichen, verfügt die erfindungsgemäße Niveauregelventileinheit über mindestens ein elektrisch angesteuertes oder vorgesteuertes Ventil. Hierbei kann über einen Elektromagneten unmittelbar eine Umschaltung mindestens eines Ventils erfolgen (direkte elektrische Ansteuerung). Ebenfalls möglich ist, dass ein elektromagnetisches Vorsteuerventil Einsatz findet, in welchem mit unter Umständen kleinen Ventilquerschnitten und kleinen elektromagnetisch herbeiführbaren Umschaltkräften ein Vorsteuerdruck beeinflusst wird, welcher dann auf einen pneumatischen Steueranschluss eines so vorgesteuerten Ventils mit unter Umständen größeren Ventilquerschnitten einwirkt (elektrische Vorsteuerung).

Während gemäß dem Stand der Technik Niveauregelventileinheiten für einkreisige Luftfederungsanlagen lediglich über einen Anschluss für sämtliche Luftfederbälge oder für eine zweikreisige Luftfederungsanlage über zwei Anschlüsse für Luftfederbälge der beiden Kreise verfügt haben, ist in die erfindungsgemäße Niveauregelventileinheit ein Verteiler integriert. Mit dem integrierten Verteiler sind pneumatische Anschlüsse zu Luftfederbälgen verbunden, so dass zwischen der Niveauregelventileinheit und den Luftfederbälgen vorzugsweise lediglich Punkt-Zu-Punkt-Leitungen bestehen können. Hierdurch ergibt sich eine kompakte Niveauregelventileinheit, welche insbesondere das Erfordernis von der Niveauregelventileinheit nachgeordneten T-Verteilern beseitigt, wodurch sich der Bauaufwand und der Montageaufwand verringert und eine Gefahr einer Leckage angesichts der reduzierten Zahl der Verbindungs- oder Verzweigungsstellen verringert.

Möglich ist, dass die Luftfederungsanlage, in welcher die erfindungsgemäße Niveauregelventileinheit Einsatz findet, einkreisig ausgebildet ist. In diesem Fall kann ein integrierter Verteiler Einsatz finden, der mit mehreren pneumatischen Anschlüssen verbunden ist, die jeweils mit einem Luftfederbalg einer Achse und Fahrzeugseite pneumatisch verbunden sind. Demgemäß besitzt der Verteiler von einer Zentralleitung abzweigende Stichleitungen in einer Zahl, welche der Zahl der Luftfederbälge entspricht. In bevorzugter Ausgestaltung kann die Niveauregelventileinheit auch Einsatz finden für eine zweikreisige Luftfederungsanlage. In diesem Fall ist auch unter Umständen die Niveauregelventileinheit zweikreisig ausgebildet. Diese besitzt dann zwei Verteiler, wobei jeweils ein Verteiler mit den Anschlüssen von Luftfederbälgen eines Kreises verbunden ist. Alternativ möglich ist, dass mit einem Anschluss des Verteilers mehrere Luftfederbälge desselben Kreises verbunden sind.

Möglich ist auch, dass die Niveauregelventileinheit über zwei Versorgungsanschlüsse verfügt, die jeweils mit einem Verteiler und den Luftfederbälgen eines zugeordneten Kreises verbindbar sind. Hierbei können die genannten Versorgungsanschlüsse unmittelbar mit der Druckluftquelle oder unter Zwischenschaltung einer Hebe-Senk-Ventileinheit mit der Druckluftquelle verbunden sein. Möglich ist natürlich auch, dass zusätzlich zu den genannten zwei Versorgungsanschlüssen noch ein weiterer Versorgungsanschluss vorgesehen ist, der (unter Umständen unter Umgehung einer Hebe-Senk-Ventileinheit) mit der Druckluftquelle verbunden ist, so dass alternativ eine Versorgung über die Hebe-Senk-Ventileinheit einerseits und unmittelbar von der Druckluftquelle andererseits möglich ist.

Als Niveauregelventil in der Niveauregelventileinheit kann hinsichtlich der Ansteuerung und der Bauweise, beispielsweise als Sitzventil oder Schieberventil, jede an sich bekannte Ausgestaltung eines Ventils Einsatz finden. Hierbei kann lediglich ein Ventil als Niveauregelventil Einsatz finden oder eine Mehrzahl von Ventilen, wobei auch die Zahl der von dem Ventil geschalteten Wege und die Zahl der Schaltstellungen der Ventile beliebig ist.

Für eine besondere Ausgestaltung der Erfindung ist ein Niveauregelventil in Ausgestaltung als 4/3-Wegeventil eingesetzt. Dieses besitzt zwei Anschlüsse, die jeweils über eine Verteiler mit Luftfederbälgen eines Kreises verbunden sind. Weiterhin ist ein Anschluss des Niveauregelventils mit einer Entlüftung verbunden und ein Anschluss mit einem Versorgungsanschluss verbunden. In einer Schaltstellung, beispielsweise einer mittigen Schaltstellung, sind die beiden Anschlüsse, die jeweils über einen Verteiler mit Luftfederbälgen eines Kreises verbunden sind, über eine Drossel miteinander verbunden, so dass die beiden Kreise über die Drossel miteinander gekoppelt sind. Dies hat zur Folge, dass infolge der Drosselwirkung kurzzeitig Druckunterschiede in den einzelnen Kreisen bestehen können, aber nach einer durch die Dimensionierung der Drossel vorgegebenen Zeitspanne Druckunterschiede über die Drossel ausgeglichen werden können. In einer anderen Schaltstellung des 4/3-Wegeventils sind die beiden Anschlüsse, die jeweils über einen Verteiler mit Luftfederbälgen eines Kreises verbunden sind, mit der Entlüftung verbunden. Eine derartige Schaltstellung wird automatisiert, insbesondere durch Ansteuerung durch eine Steuereinheit, angesteuert, wenn ein Konstanthalten des Niveaus des Fahrzeugsaufbaus durch die Niveauregelventileinheit erfordert, dass eine Entlüftung der Luftfederbälge erfolgt. Hierzu kann beispielsweise ein Wegsensor das oder ein Niveau des Fahrzeugaufbaus oder eines Kreises erfassen und das erfasste Niveau in Form eines elektrischen Signals an die genannte Steuereinheit übermitteln, die dann nach Auswertung und Vergleich mit einem Sollniveau oder einer Sollniveau-Spanne eine Herbeiführung der genannten Schaltstellung bewirkt. Zusätzlich ist erfindungsgemäß dann eine weitere Schaltstellung vorgesehen, in welcher die beiden Anschlüsse, die jeweils über einen Verteiler mit Luftfederbälgen eines Kreises verbunden sind, mit einem Versorgungsanschluss verbunden sind. In dieser Schaltstellung kann ein Belüften der Luftfederbälge erfolgen, wenn mittels der Niveauregelventileinheit ein Anheben des Niveaus herbeigeführt werden soll. Sofern der Niveauregelventileinheit ein manuell betätigbares Hebe-Senk-Ventil vorgeordnet ist, kann auch für ein Erkennen, dass eine manuelle Betätigung des Hebe-Senk-Ventils erfolgt, das Niveauregelventil durch geeignete Ansteuerung durch eine Steuereinheit in die letztgenannte Schaltstellung überführt werden. In diesem Fall werden die beiden Anschlüsse, die jeweils über einen Verteiler mit Luftfederbälgen eines Kreises verbunden sind, über das Hebe-Senk-Ventil mit der Druckluftquelle verbunden, so dass das Niveauregelventil lediglich die manuell an dem Hebe-Senk-Ventil angewählten manuellen Zustände an die Luftfederbälge "weitergibt", also eine Belüftung oder eine Entlüftung durch das Hebe-Senk-Ventil erfolgen kann.

In bevorzugter Ausgestaltung besitzt die Niveauregelventileinheit eine Schaltstellung, in welcher ein Versorgungsanschluss über den Verteiler mit Anschlüssen von Luftfederbälgen verbunden ist. Eine derartige Schaltstellung kann alternativ oder kumulativ für vielfältige unterschiedliche Zwecke genutzt werden:
- Möglich ist, dass in dieser Schaltstellung Druckluft von dem Versorgungsanschluss über den Verteiler zu den Luftfederbälgen gelangt, so dass im Rahmen der elektronischen Niveauregelung diese Schaltstellung eingenommen wird, um das Niveau des Fahrzeugaufbaus zu heben. Hierzu kann der Versorgungsanschluss unmittelbar mit der Druckluftquelle oder mittelbar unter Zwischenschaltung weiterer pneumatischer Baueinheiten mit der Druckluftquelle verbunden sein.
- Ebenfalls möglich ist, dass diese Schaltstellung eingenommen wird, um die Niveauregelventileinheit in eine Art Durchlassstellung zu schalten, in welcher die pneumatische Beaufschlagung der Luftfederbälge nicht durch die Niveauregelventileinheit erfolgt, sondern über eine zusätzliche Baueinheit erfolgt, die der Niveauregelventileinheit, nämlich dem Versorgungsanschluss, vorgeordnet ist. Beispielsweise kann diese Schaltstellung eingenommen werden, wenn dem Versorgungsanschluss ein Hebe-Senk-Ventil vorgeordnet ist und ein elektrisches Signal vorliegt, welches indiziert, dass eine manuelle Betätigung des Hebe-Senk-Ventils erfolgt, aufgrund dieses Signals die Niveauregelventileinheit, beispielsweise durch eine Steuereinheit, in die genannte Schaltstellung umgeschaltet wird und dann über das Hebe-Senk-Ventil durch die Niveauregelventileinheit in ihrer "Durchlassstellung" die manuelle verursachte Be- und Entlüftung erfolgen soll. Für diese Ausführungsform ist es möglich, dass das Hebe-Senk-Ventil neben der Be- und Entlüftungsstellung auch eine zusätzliche Sperrstellung besitzt, in welcher trotz Niveauregelventileinheit in der genannten Durchlassstellung das Niveau der Luftfederbälge gehalten wird. Im Extremfall möglich wäre auch, dass die Hebe-Senk-Ventileinheit an sich nur eine Be- und eine Entlüftungsstellung besitzt, die manuell anwählbar sind zum Heben und Senken des Fahrzeugaufbaus. Wird hingegen erkannt, dass ein Niveau konstant gehalten werden soll, was durch manuelle Vorgabe eines entsprechenden Wunsches erfolgen kann und/oder durch automatisiertes Erkennen einer minimalen oder maximalen Niveauhöhe, kann bei Hebe-Senk-Ventil in Be- oder Entlüftungsstellung die Niveauregelventileinheit von der Durchlassstellung in die Sperrstellung geschaltet werden. In diesem Fall kann das Absperren der Luftfederbälge nicht durch die Hebe-Senk-Ventileinheit, sondern durch die Niveauregelventileinheit erfolgen, so dass die Hebe-Senk-Ventileinheit auch ohne Sperrstellung ausgebildet sein kann. Hinsichtlich näherer Details wird auf die am selben Tag wie die vorliegende Anmeldung eingereichte Anmeldung der Anmelderin mit dem Titel "Luftfederungsanlage" verwiesen.

Um lediglich eine weitere Möglichkeit der vielen unterschiedlichen Möglichkeiten für die Ausgestaltung des Niveauregelventils zu nennen, kann das Niveauregelventil als 3/2-Wegeventil ausgebildet sein. In diesem Fall verfügt das Niveauregelventil über einen Anschluss, der über mindestens einen Verteiler mit Luftfederbälgen verbunden ist. Ein weiterer Anschluss des Niveauregelventils ist mit einem Versorgungsanschluss verbunden. Schließlich ist der dritte Anschluss mit einer Entlüftung verbunden. In einer Schaltstellung ist der mit den Luftfederbälgen verbundene Anschluss mit dem Versorgungsanschluss verbunden, so dass unmittelbar ein Heben des Niveaus erfolgt und/oder eine Verbindung zu einem manuell betätigbaren Hebe-Senk-Ventil geschaffen ist. In einer anderen Schaltstellung ist der mit den Luftfederbälgen verbundene Anschluss mit der Entlüftung verbunden, um eine Verringerung des Niveaus herbeizuführen.

Insbesondere für den Fall, dass das Niveauregelventil mit einfachen pneumatischen Komponenten ausgebildet sein soll, kann dieses mit einem 3/2-Wegeventil und einem vor- oder nachgeordneten 2/2-Wegeventil ausgebildet sein. Beispielsweise kann das 3/2-Wegeventil eine Be- und eine Entlüftungsstellung besitzen, so dass für nachgeschaltetes 2/2-Wegeventil in Durchlassstellung über das 3/2-Wegeventil eine Be- und Entlüftung der Luftfederbälge ansteuerbar ist. Wird hingegen das 2/2-Wegeventil in seine Sperrstellung überführt, sind die Luftfederbälge unabhängig von der Stellung des 3/2-Wegeventils von der Entlüftung und dem Versorgungsanschluss abgesperrt.

Für den Fall, dass die erfindungsgemäße Niveauregelventileinheit Einsatz finden soll in einer zweikreisigen Luftfederungsanlage, kann auch eine Kombination aus einem 3/2-Wegeventil und zwei 2/2-Wegeventilen Einsatz finden, wobei in diesem Fall die 2/2-Wegeventile jeweils über einen Verteiler mit Luftfederbälgen eines Kreises verbunden sind. Demgemäß kann für jeden Kreis separat eine Be- oder Entlüftung erfolgen je nach Schaltstellung des 3/2-Wegeventils einerseits und der zwei 2/2-Wegeventile andererseits.

Um eine noch kompaktere Bauweise auch für den Fall zu erzielen, dass das Fahrzeug mit einer Liftachse ausgestattet werden soll, kann in die Niveauregelventileinheit auch ein Liftachsventil integriert sein. Diese Integration kann in ein gemeinsames Gehäuse als fester Bestandteil desselben erfolgen. Ebenfalls möglich ist, dass die Niveauregelventileinheit modular ausgebildet ist, wobei ein Teilmodul mit dem Liftachsventil gebildet ist. Dieses kann beispielsweise an ein Hauptmodul der Niveauregelventileinheit angeflanscht werden, wobei mit dem Anflanschen vorzugsweise auch pneumatische und/oder elektrische Verbindungen geschaffen werden für eine Kombination eines Hauptmoduls der Niveauregelventileinheit mit dem Niveauregelventil mit dem Teilmodul für das Liftachsventil. Für eine derartige Ausgestaltung kann beispielsweise das Liftachsventil über einen Versorgungsanschluss des Hauptmoduls der Niveauregelventileinheit mit Druckluft versorgt werden und/oder eine Entlüftung des Hauptmoduls auch für das Liftachsventil genutzt werden. Entsprechend kann ein elektrisches Signal, welches in dem Hauptmodul verwendet wird, auch zu dem Modul für das Liftachsventil "durchgeschleift" sein oder über entsprechende Steckverbindungen übergeben werden.

Auch für das Liftachsventil kann ein Ventil beliebiger Ansteuerung, Bauart, mit beliebigen Schaltstellungen und beliebiger Zahl der Anschlüsse Einsatz finden. Um diesbezüglich lediglich ein mögliches Beispiel zu nennen kann für das Liftachsventil ein 6/2-Wegeventil eingesetzt werden. Dieses besitzt dann einen Anschluss, der mit einem Luftfederbalg, sämtlichen Luftfederbälgen oder Luftfederbälgen eines Kreises oder einem zugeordneten Verteiler verbunden ist. Des Weiteren besitzt das Liftachsventil einen Anschluss, der mit einem Liftbalg verbunden ist. Ein weiterer Anschluss des Liftachsventils ist mit einem Tragbalg verbunden. In einer ersten Schaltstellung, in welcher die Liftachse nicht aktiv ist, ist über das Liftachsventil der Liftbalg mit einem Versorgungsanschluss verbunden, so dass dieser mit Druckluft beaufschlagt wird und die Liftachse angehoben wird. In dieser Schaltstellung wird im Gegenzug ein Tragbalg (oder werden mehrere Tragbälge der Liftachse) mit einer Entlüftung verbunden, was für die angehobene Liftachse erforderlich ist. Der mit einem Luftfederbalg verbundene Anschluss des Liftachsventils ist in dieser Schaltstellung gesperrt, so dass das Druckluftniveau der Luftfederbälge für andere Achsen als die Liftachse durch das Liftachsventil nicht beeinflusst wird. Das Liftachsventil besitzt darüber hinaus eine weitere Schaltstellung, in welcher der Liftbalg mit der Entlüftung verbunden ist, was für das Absenken der Liftachse erforderlich ist. In dieser Schaltstellung sollen die Tragbälge der Liftachse druckbeaufschlagt werden, um einen Teil der Last mittels der Liftachse zu tragen. In dieser Schaltstellung wird allerdings der Tragbalg nicht unmittelbar mit der Druckluftquelle verbunden. Vielmehr wird über das Liftachsventil in dieser Schaltstellung mindestens ein Tragbalg, vorzugsweise werden sämtliche Tragbälge der Liftachse, mit mindestens einem Luftfederbalg verbunden, beispielsweise Luftfederbälgen eines Kreises oder sämtlichen Luftfederbälgen. Dies hat zur Folge, dass in sämtlichen miteinander verbundenen Luftfederbälgen und Tragbälgen derselbe Druck über das Liftachsventil herbeigeführt wird, so dass sich die Last gleichmäßig oder gemäß einer vorgegebenen Achsverteilung auf die Liftachse und die weiteren Achsen verteilen kann.

In weiterer Ausgestaltung der Erfindung wird die Niveauregelventileinheit multifunktional auch für die Ansteuerung einer Überschussachse verwendet. Unter einer derartigen Überschussachse wird eine Achse verstanden, welche bei einer Beladung des Fahrzeugs unterhalb eines vorgegebenen oder auch flexiblen Schwellwerts keine Achslast trägt, aber mit Überschreitung des Schwellwerts für die Beladung einen Teil der Achslast übernimmt, wobei vorzugsweise dann eine gleichmäßige oder vorgegebene Verteilung der Achslasten auf die Überschussachse und die weiteren Achsen erfolgt. Erfindungsgemäß ist dann eine Überschussachsventileinheit in die Niveauregelventileinheit integriert. Diese kann beispielsweise mit geeigneter elektrischer Ansteuerung durch eine Steuereinheit bei Überschreitung des Schwellwerts der Beladung, was beispielsweise mittels eines Drucksensors an den Luftfederbälgen der ständig belasteten Achsen erkannt werden kann, eine pneumatische Verbindung zwischen den Luftfederbälgen der Überschussachse einerseits und den weiteren Luftfederbälgen schaffen, so dass ein pneumatischer Druckausgleich erfolgt mit einer Aufteilung der Achslasten auf die einzelnen Luftfederbälge. Durch die Gestaltung der pneumatischen Leitungsquerschnitte, Drosseln u. ä kann das Zeitverhalten für den pneumatischen Ausgleich beeinflusst werden und ggf. auch eine Achslastverteilung vorgegeben werden. Für die Ausgestaltung der Überschussachsventileinheit mit unterschiedlichen Überschussachsventilen gibt es vielfältige Möglichkeiten. Lediglich beispielhaft führt die folgende Beschreibung Beispiele mit Ausbildung der Überschussachsventileinheit mit einem 5/3-Wegeventil, einem 3/3-Wegeventil und mehreren Überschussachsventilen, insbesondere in Ausgestaltung als 2/2-Wegeventile oder als 4/2-Wegeventile, an.

Für eine weitere erfindungsgemäße Lösung ist in einer Luftfederungsanlage eine Niveauregelventileinheit eingesetzt, wobei die Niveauregelventileinheit wie zuvor erläutert ausgebildet sein kann. Zwischen eine Druckluftquelle und mindestens einen Versorgungsanschluss der Niveauregelventileinheit kann dann eine manuell betätigbare Hebe-Senk-Ventileinheit zwischengeschaltet sein.

In weiterer Ausgestaltung kann die Hebe-Senk-Ventileinheit zwei Anschlüsse besitzen, die jeweils mit einem Versorgungsanschluss der Niveauregelventileinheit verbunden sind. Dies ist insbesondere von Vorteil, wenn die Luftfederungsanlage zweikreisig ausgebildet ist und über die Hebe-Senk-Ventileinheit auch die beiden Luftfederkreise unabhängig voneinander be- und entlüftet werden.

In weiterer Ausgestaltung der Erfindung ist die Hebe-Senk-Ventileinheit mit einem Druckschalter pneumatisch gekoppelt, der in Abhängigkeit einer manuell vorgegebenen Betriebsstellung der Hebe-Senk-Ventileinheit ein elektrisches Signal erzeugt. Hierbei kann der Druckschalter in der Niveauregelventileinheit angeordnet sein, also in diese integriert sein. Der Druckschalter kann aber auch an die Niveauregelventileinheit angeflanscht sein. Möglich ist allerdings auch, dass der Druckschalter außerhalb der Niveauregelventileinheit an beliebiger Stelle oder im Bereich einer Steuereinheit angeordnet sein. Das elektrische Ausgangssignal wird dann einer Steuereinheit zugeführt. Die Steuereinheit ist mit einer Steuerungslogik oder einem Programm ausgestattet, mittels dessen eine Ansteuerung der Niveauregelventileinheit erfolgt. Die Steuerungslogik ist hierbei derart ausgestaltet, dass die Ansteuerung der Niveauregelventileinheit in Abhängigkeit des von dem Druckschalter erzeugten elektrischen Signals erfolgt. So kann beispielsweise bei manueller Betätigung der Hebe-Senk-Ventileinheit der Druckschalter das Signal erzeugen, welches der Steuereinheit indiziert, dass die manuelle Betätigung erfolgt. In diesem Fall kann die Niveauregelventileinheit in ihre Durchlassstellung geschaltet werden, wie dies bereits zuvor erläutert worden ist, um eine Beeinflussung der pneumatischen Verhältnisse in den Luftfederbälgen durch die Hebe-Senk-Ventileinheit zu ermöglichen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in schematischer Darstellung eine einkreisige Luftfederungsanlage mit Hebe-Senk-Ventileinheit und nachgeschalteter elektrisch angesteuerter Niveauregelventileinheit.
- **Fig. 2**: zeigt in schematischer Darstellung eine zweikreisige Luftfederungsanlage mit Hebe-Senk-Ventileinheit und nachgeschalteter elektrisch angesteuerter Niveauregelventileinheit.
- **Fig. 3**: zeigt in schematischer Darstellung eine zweikreisige Luftfederungsanlage gemäß Fig. 2, wobei hier allerdings die beiden Kreise über eine in die Niveauregeventileinheit integrierte Drossel miteinander gekoppelt sind.
- **Fig. 4**: zeigt eine zweikreisige Luftfederungsanlage mit Einsatz elektromagnetischer Vorsteuerventile, detaillierterer schematischer Darstellung der Niveauregelventileinheit und einer integrierten Liftachsventileinheit.
- **Fig. 5**: zeigt eine zweikreisige Luftfederungsanlage grundsätzlich gemäß Fig. 4, bei welcher allerdings die Niveauregelventileinheit modular mit einem Niveauregelmodul und einem Liftachsmodul gebildet ist.
- **Fig. 6**: zeigt schematisch eine einkreisige Luftfederungsanlage mit einer Niveauregelventileinheit, in welche ein Liftachsventil integriert ist.
- **Fig. 7**: zeigt schematisch eine Luftfederungsanlage mit einer Überschussachse, wobei hier in die Niveauregelventileinheit eine Überschussachsventileinheit integriert ist und zwei Kreise der Luftfederungsanlage über eine integrierte Drossel miteinander verbunden sind.
- **Fig. 8**: zeigt schematisch eine Luftfederungsanlage mit Überschussachse, wobei zwei Kreise der Luftfederungsanlage gegeneinander absperrbar sind.
- **Fig. 9**: zeigt schematisch eine Luftfederungsanlage mit Überschussachse, wobei in die Niveauregelventileinheit eine Überschussachsventileinheit integriert ist und die Luftfederungsanlage einkreisig ausgebildet ist.
- **Fig. 10**: zeigt schematisch eine Luftfederungsanlage mit einer elektrisch vorgesteuerten Niveauregelventileinheit, in welcher zwei Luftfederkreise über ein gemeinsames 3/2-Wegeventil und jeweils ein 2/2-Wegeventil mit Druckluft beaufschlagt werden.
- **Fig. 11**: zeigt eine Luftfederungsanlage mit einer grundsätzlich der Niveauregelventileinheit gemäß Fig. 10 entsprechenden Niveauregelventileinheit, wobei hier allerdings zwischen Vorratsbehälter und Niveauregelventileinheit eine Hebe-Senk-Ventileinheit zwischengeschaltet ist.
- **Fig. 12**: zeigt schematisch eine Luftfederungsanlage mit Hebe-Senk-Ventileinheit und elektrisch vorgesteuerter Niveauregelventileinheit, in welcher zwei über eine Drossel miteinander gekoppelte Luftfederkreise über ein gemeinsames 3/2-Wegeventil und jeweils ein 2/2-Wegeventil mit Druckluft beaufschlagt werden und eine Überschussachsventileinheit zur separaten Ansteuerung von Luftfederbälgen auf unterschiedlichen Seiten einer Überschussachse in die Niveauregelventileinheit integriert ist.
- **Fig. 13**: zeigt schematisch eine Luftfederungsanlage entsprechend Fig. 12 mit alternativer Ausgestaltung einer Überschussachsventileinheit.

### FIGURENBESCHREIBUNG

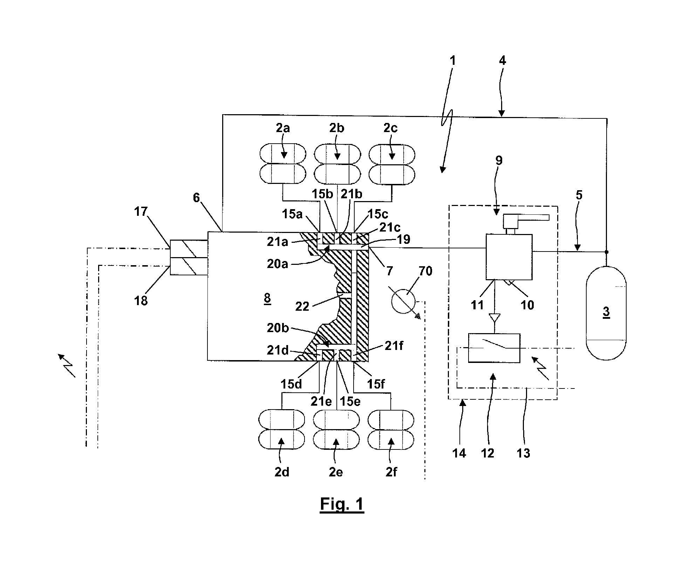

**Fig. 1** zeigt eine Luftfederungsanlage 1, die hier einkreisig ausgebildet ist, so dass in sämtlichen Luftfederbälgen 2a-2f dasselbe Druckniveau herrscht. Hierbei wird eine unter Umständen auch mit mehreren Kammern oder einzelnen Bälgen gebildete Luftfedereinheit, die einer Achse sowie einem Fahrzeug zugeordnet ist, jeweils als ein Luftfederbalg 2a (2b-2f) angesehen.

In der Luftfederungsanlage 1 ist ein Vorratsbehälter 3 über parallele Leitungszweige 4, 5 jeweils mit einem Versorgungsanschluss 6, 7 einer Niveauregelventileinheit 8 verbunden. Der Leitungszweig 4 verbindet unmittelbar den Vorratsbehälter 3 mit dem Versorgungsanschluss 6, während in dem Leitungszweig 5 die Verbindung des Vorratsbehälters 3 mit dem Versorgungsanschluss 7 über eine Hebe-Senk-Ventileinheit 9 erfolgt. In dem Fachmann an sich bekannter Weise kann die Hebe-Senk-Ventileinheit 9 manuell von einer Stellung Stopp in eine Stellung Fahrt und/oder Senken überführt werden, wobei in der Stellung Stopp der Leitungszweig 5 abgesperrt ist, in der Stellung Heben eine pneumatische Verbindung zwischen dem Vorratsbehälter 3 und dem Versorgungsanschluss 7 geschaffen ist und in der Stellung Senken der Versorgungsanschluss 7 mit einer Entlüftung 10 der Hebe-Senk-Ventileinheit 9 verbunden ist. Möglich ist, dass die Stellung Stopp ohne manuelle Betätigung automatisiert eingenommen ist, insbesondere durch Einsatz einer sogenannten Totmann-Feder.

Die Hebe-Senk-Ventileinheit 9 besitzt einen Auslass 11, der mit einem Druckschalter 12 pneumatisch verbunden ist. Für eine manuelle Betätigung der Hebe-Senk-Ventileinheit 9 wird der Druckschalter 12 betätigt, insbesondere geschlossen, so dass der Druckschalter 12 ein elektrisches Ausgangssignal 13 erzeugt, welches von der manuellen Betätigung der Hebe-Senk-Ventileinheit 9 abhängig ist. Beispielsweise kann der Druckschalter 12 in der Stellung Heben und Senken geschlossen sein, während dieser sich in einer Öffnungsstellung befindet, wenn die Hebe-Senk-Ventileinheit 9 in der Stellung Stopp ist.

Für das in Fig. 1 dargestellte Ausführungsbeispiel sind die Hebe-Senk-Ventileinheit 9 und der Druckschalter 12 in einer gemeinsamen Baueinheit 14 angeordnet, welche einen pneumatischen Anschluss zur Verbindung mit dem Vorratsbehälter 3 sowie einen pneumatischen Anschluss zur Verbindung mit dem Versorgungsanschluss 7 besitzt sowie elektrische Anschlüsse für die elektrische Leistungsversorgung des Druckschalters 12 sowie das Ausgangssignal 13.

Neben den Versorgungsanschlüssen 6, 7 besitzt die Niveauregelventileinheit 8 pneumatische Anschlüsse 15a-15f, die jeweils als Punkt-Zu-Punkt-Verbindung, also ohne Verzweigung, mit den Luftfederbälgen 2a bis 2f pneumatisch verbunden sind. Darüber hinaus besitzt die Niveauregelventileinheit 8 eine in Fig. 1 nicht dargestellte Entlüftung 16, die unmittelbar in die Niveauregelventileinheit 8 integriert sein kann oder über einen entsprechenden Anschluss angebunden ist bei Anordnung entfernt von der Niveauregelventileinheit 8. Schließlich besitzt die Niveauregelventileinheit 8 zumindest einen elektrischen Steueranschluss, hier zwei elektrische Steueranschlüsse 17, 18, über welche der Niveauregelventileinheit 8 elektrische Steuersignale von einer in den Figuren nicht dargestellten Steuereinheit zugeführt werden. Hierbei kann die Steuereinheit ausschließlich für die Ansteuerung der Niveauregelventileinheit 8 zuständig sein oder multifunktional eingesetzt sein, indem diese beispielsweise für die Ansteuerung einer Bremsanlage, sei es eine elektromechanische Bremse oder eine pneumatische Bremsanlage mit zumindest teilweise elektronischer Steuerung oder Vorsteuerung, genutzt wird. Der Steuereinheit wird auch das elektrische Ausgangssignal 13 des Druckschalters 12 zugeführt, damit dieses und damit die manuell gewählte Stellung der Hebe-Senk-Ventileinheit 9 für die Steuersignale an den elektrischen Steueranschlüssen 17, 18 Berücksichtigung finden kann.

In der Niveauregelventileinheit 8 ist der Versorgungsanschluss 7 unmittelbar pneumatisch gekoppelt mit den Anschlüssen 15a-15f. Dies erfolgt von einer Zentralleitung 19 über einen Verteiler 20, der hier mit zwei Teil-Verteilern 20a, 20b gebildet ist, die mit der Zentralleitung 19 gekoppelt sind und jeweils drei Stichleitungen 21a-21f besitzen, die die Zentralleitung 19 mit den Anschlüssen 15a-15f verbinden. Somit kann je nach Stellung der Hebe-Senk-Ventileinheit 9 in der Stellung Heben, Senken oder Stopp über den Versorgungsanschluss 7 eine Belüftung, Entlüftung sämtlicher Luftfederbälge 2a-2f erfolgen oder der pneumatische Austausch von Druckluft in der Stellung Stopp über den Versorgungsanschluss 7 abgesperrt werden. In die Zentralleitung 19 mündet darüber hinaus eine Niveauregelleitung 22. Für aktivierte Niveauregelung, insbesondere im Fahrbetrieb, befindet sich die Hebe-Senk-Ventileinheit 9 in der Stellung Stopp oder wird diese automatisiert in die Stellung Stopp bzw. eine Stellung Fahrt überführt, so dass der Versorgungsanschluss 7 abgesperrt ist. Über in Fig. 1 nicht im Detail dargestellte Niveauregelventile, die über die elektrischen Anschlüsse 17, 18 von der Steuereinheit elektrisch direkt angesteuert werden oder elektropneumatisch vorgesteuert werden, kann die Niveauregelleitung 22 belüftet, abgesperrt und entlüftet werden, womit somit ein Heben, Konstanthalten oder Senken des Niveaus des Fahrzeugaufbaus bzw. des Druckluftniveaus in den Luftfederbälgen 2a-2f erfolgen kann.

In den Figuren ebenfalls dargestellt ist ein Wegsensor 70 in beliebiger Ausgestaltung, welcher das Niveau des Fahrzeugaufbaus oder eines einzelnen Luftfederbalgs 2 oder einer Gruppe von Luftfederbälgen erfasst und welcher ein elektrisches Ausgangssignal erzeugt, das dann der Steuereinheit zur geeigneten elektrischen Ansteuerung der Anschlüsse 17, 18 zugeführt wird. Um lediglich einige Möglichkeiten für die Ausbildung des Wegsensors von der Vielzahl unterschiedlicher Möglichkeiten zu benennen, kann ein Wegsensor auf Grundlage eines HallSensors, eine Infrarot-Abstandsmessung oder Sensoren, wie diese in WO 01/89863 A2 beschrieben sind (vergleiche auch den bzgl. WO 01/89863 A2 recherchierten Stand der Technik), eingesetzt werden.

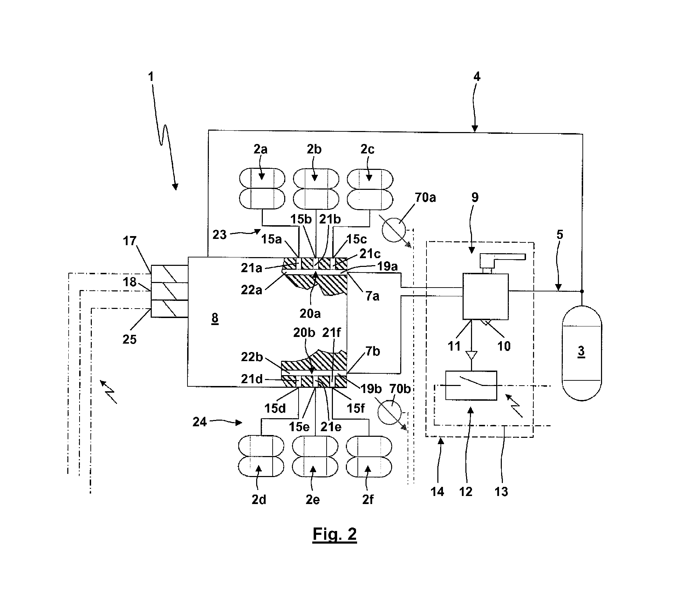

Für das in **Fig. 2** dargestellte Ausführungsbeispiel ist die Luftfederungsanlage 1 zweikreisig ausgebildet. Hier ist jeweils ein Kreis 23 bzw. 24 mit Luftfederbälgen 2a-2c bzw. 2d-2f einer Fahrzeugseite zugeordnet. Den beiden Kreisen 23, 24 ist jeweils ein Verteiler 20a, 20b zugeordnet, wobei der Verteiler 20a eine Zentralleitung 19a mit Stichleitungen 21 a-21 c sowie Anschlüssen 15a-15c verbindet, während der Verteiler 20b eine Zentralleitung 19b mit Stichleitungen 21 d-21f und Anschlüssen 15d-15f verbindet. Für die zweikreisige Ausbildung der Luftfederungsanlage 1 gemäß Fig. 2 münden in die Zentralleitungen 19a, 19b separate Niveauregelleitungen 22, die dann über separate Niveauregelventile der Niveauregelventileinheit 8 belüftet, entlüftet oder abgesperrt werden können je nach den an den Anschlüssen 17, 18 und einem zusätzlichen Anschluss 25 anliegenden elektrischen Steuersignalen. Für manuelle Betätigung der Hebe-Senk-Ventileinheit 9 können für deaktivierte elektrische Niveauregelung beide Kreise 23, 24 willkürlich belüftet, entlüftet oder abgesperrt werden, womit ein Anheben des Niveaus, Absenken des Niveaus und Konstanthalten des Niveaus je nach Wunsch des Fahrers erfolgen kann. Befindet sich hingegen die Hebe-Senk-Ventileinheit 9 in einer Stellung Stopp oder Fahrt, kann je nach elektrischen Steuersignalen an den Anschlüssen 17, 18 und 25 eine elektronische Niveauregelung separat für die beiden Kreise 23, 24 erfolgen. Hier sind zwei Wegsensoren 70a, 70b vorgesehen zur Erfassung jeweils des Niveaus der beiden Kreise, so dass das Niveau der Kreise separat voneinander über die Steuereinheit geregelt werden kann.

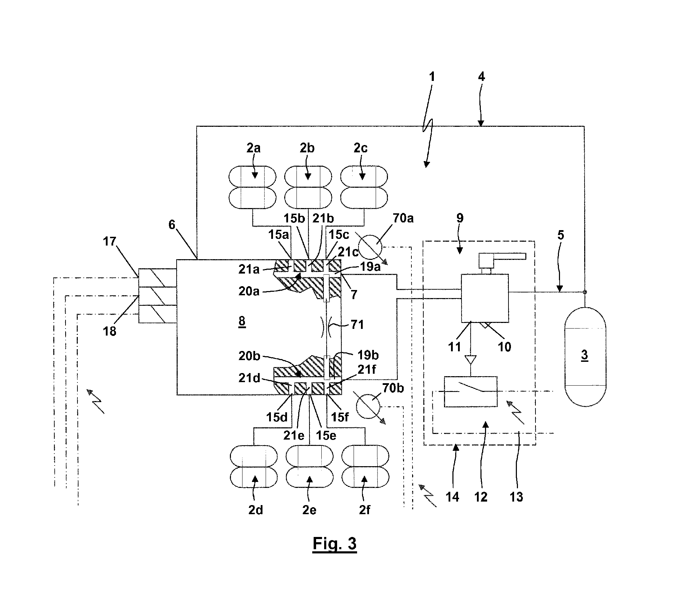

**Fig. 3** zeigt ein im Wesentlichen Fig. 2 entsprechendes Ausführungsbeispiel, wobei hier allerdings die den beiden Kreisen zugeordneten Zentralleitungen 19a, 19b über eine in die Niveauregelventileinheit 8 integrierte Drossel 71 miteinander gekoppelt sind.

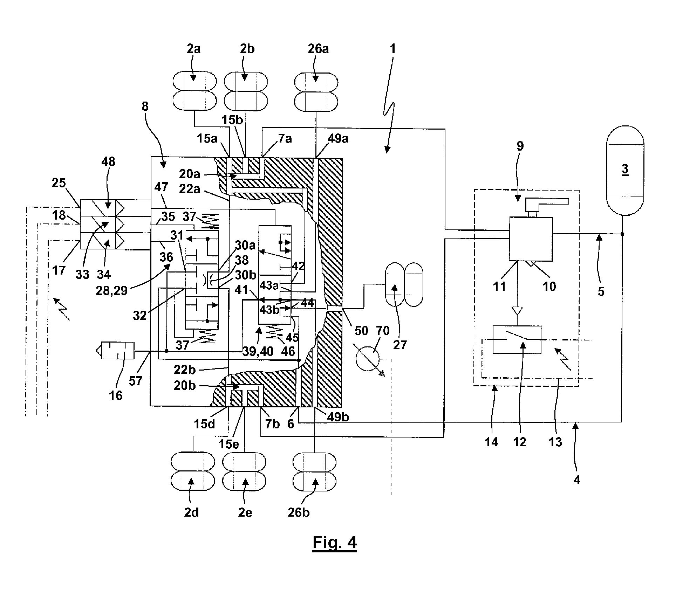

**Fig. 4** zeigt ein Ausführungsbeispiel einer Luftfederungsanlage 1 für ein Fahrzeug mit zwei Achsen, die über Luftfedern 2a, 2d; 2b, 2e abgestützt sind. Die Luftfederungsanlage 1 besitzt eine optional automatisiert oder nach Fahrerwunsch einsetzbare Liftachse, im Bereich welcher Tragbälge 26a, 26b sowie ein Liftbalg 27 eingesetzt sind.

In die Niveauregelventileinheit 8 integriert ist ein Niveauregelventil 28, welches hier als 4/3-Wegeventil 29 ausgebildet ist. Das 4/3-Wegeventil 29 besitzt Anschlüsse 30a, 30b. Der Anschluss 30a ist über die Niveauregelleitung 22a mit dem Verteiler 20a, also den Anschlüssen 15a, 15b und Luftfederbälgen 2a, 2b sowie dem Versorgungsanschluss 7a, verbunden, während der Anschluss 30b über die Niveauregelleitung 22b mit dem Verteiler 20b, also den Anschlüssen 15d, 15e und den Luftfederbälgen 2d und 2e sowie dem Versorgungsanschluss 7b, verbunden ist. Ein weiterer Anschluss 31 ist mit der Entlüftung 16 pneumatisch verbunden, während ein Anschluss 32 mit dem Versorgungsanschluss 6, also über den Leitungszweig 4 mit dem Vorratsbehälter 3, pneumatisch verbunden ist. Die elektrischen Anschlüsse 17, 18 der Niveauregelventileinheit 8 sind elektropneumatischen Vorsteuerventilen 33, 34 zugeordnet, welche einen Vorsteuerdruck in Steuerleitungen 35, 36 vorgeben. Ohne (oder bei gleicher) pneumatischer Beaufschlagung der Steuerleitungen 35, 36 befindet sich das 4/3-Wegeventil 29 in der in Fig. 4 wirksamen mittigen Schaltstellung infolge mindestens einer Feder 37, während bei pneumatischer Beaufschlagung der Steuerleitung 35 das 4/3-Wegeventil in eine untere Schaltstellung umgeschaltet wird und bei pneumatischer Beaufschlagung der Steuerleitung 36 in eine obere Schaltstellung umgeschaltet wird. In der in Fig. 4 wirksamen mittigen Schaltstellung sind die Anschlüsse 30a, 30b über eine Drossel 38 miteinander verbunden, so dass in dieser Schaltstellung die Druckluftmenge in den Luftfederbälgen 2a, 2b, 2d, 2e konstant ist, aber über die Drossel 38 ein Druckausgleich zwischen den beiden Seiten 2a, 2b einerseits und 2d, 2e andererseits möglich ist. Erfolgt durch pneumatische Beaufschlagung der Steuerleitung 35 eine Umschaltung des 4/3-Wegeventils 29 in die untere Schaltstellung, werden die beiden Anschlüsse 30a, 30b mit dem Anschluss 31, also letztendlich mit der Entlüftung 16 verbunden, was zur Folge hat, dass die Luftfederbälge 2a, 2b, 2d, 2e entlüftet werden. Ein derartiger Schaltzustand wird durch geeignete elektrische Steuersignale an den Anschlüssen 17, 18 herbeigeführt, wenn über einen Wegsensor mittels der Steuereinheit erkannt wird, dass eine Verringerung des Niveaus erforderlich ist. Erfolgt hingegen durch Druckbeaufschlagung der Steuerleitung 36 eine Umschaltung des 4/3-Wegeventils 29 in die obere Schaltstellung, werden die Anschlüsse 30a, 30b mit dem Anschluss 32, also über den Versorgungsanschluss 6 und den Leitungszweig 4 mit dem Vorratsbehälter 3 verbunden, womit eine Belüftung der Luftfederbälge 2a, 2b, 2d, 2e erfolgt. Eine derartige Schaltstellung wird durch geeignete Steuersignale an den Anschlüssen 17, 18 durch die Steuereinheit angesteuert, wenn mittels eines Wegsensors signalisiert wird, dass ein Anheben des Niveaus erforderlich ist.

Optional kann zusätzlich zu dem Niveauregelventil 28 in der Niveauregelventileinheit 8 ein Liftachsventil 39 Einsatz finden. Für das in Fig. 4 dargestellte Ausführungsbeispiel ist das Liftachsventil 39 als 6/2-Wegeventil 40 ausgebildet. Dieses besitzt einen Anschluss 41, welcher mit der Entlüftung 16 verbunden ist. Ein weiterer Anschluss 42 ist mit der Niveauregelleitung 22a, dem Verteiler 20a und den Luftfederbälgen 2a, 2b verbunden. Aus dem Vorangegangenen folgt, dass in der mittigen Schaltstellung des Niveauregelventils 28 der Anschluss 42 über die Drossel 38 auch mit der Niveauregelleitung 22b, dem Verteiler 20b und den Luftfederbälgen 2d, 2e verbunden ist. Anschlüsse 43a, 43b sind jeweils mit den Tragbälgen 26a, 26b verbunden. Ein Anschluss 44 ist mit dem Liftbalg 27 verbunden. Schließlich ist ein Anschluss 45 mit dem Versorgungsanschluss 6, also über den Leitungszweig 4 mit dem Vorratsbehälter 3, verbunden. Infolge einer Feder 46 befindet sich das Schaltventil ohne pneumatische Beaufschlagung einer Steuerleitung 47 in der oberen, in Fig. 4 wirksamen Schaltstellung, während mit pneumatischer Beaufschlagung der Steuerleitung 47 eine Umschaltung des 6/2-Wegeventils 40 in die andere Schaltstellung erfolgt. Die pneumatische Beaufschlagung der Steuerleitung 47 erfolgt über ein elektropneumatisches Vorsteuerventil entsprechend einem elektrischen Steuersignal von der Steuereinheit an dem elektrischen Steueranschluss 25.

In der in Fig. 4 wirksamen Schaltstellung verbindet das 6/2-Wegeventil 40 den Anschluss 45 mit dem Anschluss 44, so dass der Liftbalg 27 mit dem Vorratsbehälter 3 verbunden wird und somit belüftet wird, was mit dem Anheben der Liftachse korreliert. Gleichzeitig verbindet in dieser Schaltstellung das 6/2-Wegeventil die Anschlüsse 43a, 43b mit dem Anschluss 41, also der Entlüftung 16, so dass die Tragbälge 26a, 26b entlüftet werden. Hingegen wird in der anderen Schaltstellung des 6/2-Wegeventils mit pneumatischer Beaufschlagung der Steuerleitung 47 der Anschluss 44 mit dem Anschluss 41 verbunden, was zur Folge hat, dass der Liftbalg 27 über die Entlüftung 16 entlüftet wird. Hingegen wird der Anschluss 42 in dieser Schaltstellung verbunden mit den Anschlüssen 43a, 43b, was zur Folge hat, dass die Luftfederbälge 2a, 2b (und unter Zwischenschaltung der Drossel 38 auch die Luftfederbälge 2d, 2e) mit den Tragbälgen 26a, 26b pneumatisch verbunden werden, womit die Liftachse entsprechend dem Druck in den Luftfederbälgen 2a, 2b, 2d, 2e pneumatisch beaufschlagt wird und eine Teillast übernimmt. Es versteht sich, dass in der letztgenannten Schaltstellung des Liftachsventils 39 für aktivierte Liftachse auch eine Niveauregelung über das Niveauregelventil 28 erfolgen kann, mit welcher dann die pneumatischen Verhältnisse sowohl in den Luftfederbälgen 2a, 2b, 2d, 2e als auch in den Tragbälgen 26a, 26b verändert werden können. Neben den erläuterten elektrischen Anschlüssen 17, 18, 25 für die Steuersignale, den Anschlüssen 15a, 15b, 15e für die Luftfederbälge 2a, 2b, 2d, 2e, den Versorgungsanschlüssen 7a, 7b und dem Versorgungsanschluss 6 weist gemäß Fig. 4 die Niveauregelventileinheit 8 Anschlüsse 49a, 49b für die Tragbälge 26a, 26b sowie einen Anschluss 50 für den Liftbalg 27 auf. Zusätzlich ist ein Anschluss 57 vorgesehen, über welchen die Entlüftung 16 an die Niveauregelventileinheit 8 angebunden ist.

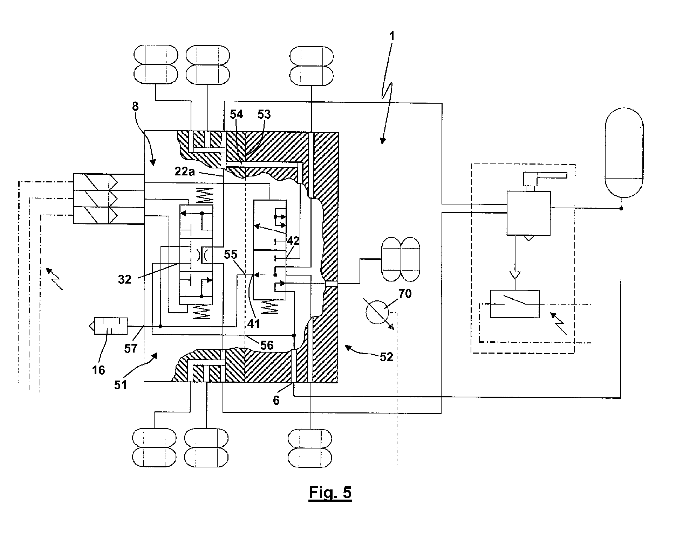

Das in **Fig. 5** dargestellte Ausführungsbeispiel ist hinsichtlich der pneumatischen Bauelemente, der pneumatischen Leitungsverbindungen und der elektropneumatischen Vorsteuerung entsprechend dem Ausführungsbeispiel gemäß Fig. 4 ausgebildet. Allerdings ist hier die Niveauregelventileinheit 8 modular ausgebildet mit einem Niveauregelmodul 51 und einem Liftachsmodul 52. Die beiden Module 51, 52 sind aneinander befestigt oder angeflanscht. Zwischen dem Niveauregelmodul 51 und dem Liftachsmodul 52 ist eine Schnittstelle 53 ausgebildet, die gemäß Fig. 5 neben der Befestigung eine pneumatische Kopplung des Niveauregelmoduls 51 mit dem Liftachsmodul 52 herbeiführt. Ergänzend, aber in Fig. 5 nicht dargestellt, ist eine elektrische Kopplung zwischen den Modulen 51, 52 über die Schnittstelle 53 möglich. Vorzugsweise erfolgt unmittelbar mit dem Verbinden der Module 51, 52, insbesondere mit dem Verschrauben oder Anflanschen derselben aneinander, die Herstellung der dichten pneumatischen Leitungsverbindungen zwischen den Modulen 51, 52. Hierbei handelt es sich bspw. um eine erste Leitungsverbindung 54, über welche der Anschluss 42 mit der Niveauregelleitung 22a gekoppelt ist. Eine weitere Leitungsverbindung 55, die durch die Schnittstelle 53 bewerkstelligt wird, verbindet den Anschluss 41 mit der Entlüftung 16. Schließlich erfolgt über eine Leitungsverbindung 56, welche durch die Schnittstelle 53 bereitgestellt wird, eine Verbindung des Anschlusses 32 mit dem Versorgungsanschluss 6.

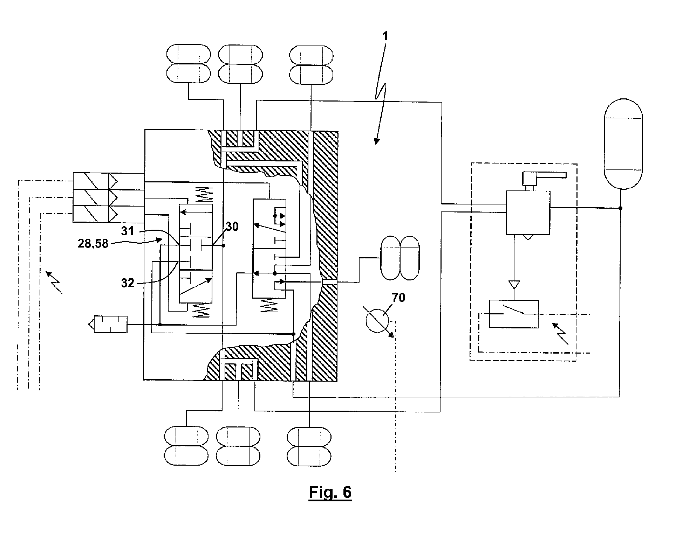

Die in **Fig. 6** dargestellte Luftfederungsanlage 1 entspricht bis auf Weiteres der Luftfederungsanlage 1 gemäß Fig. 4. Allerdings ist hier das Niveauregelventil 28 als 3/3-Wegeventil 58 ausgebildet, welches über Anschlüsse 31, 32 entsprechend dem 4/3-Wegeventil 29 gemäß Fig. 4 verfügt. Hier sind die Anschlüsse 30a, 30b de 4/3-Wegeventils 29 gemäß Fig. 4 zu einem einzigen Anschluss 30 zusammengefasst, über den die Luftfederbälge 2a, 2b, 2d, 2e beider Seiten ständig und ohne Zwischenschaltung einer Drossel 38 miteinander gekoppelt sind. Die Funktion entspricht somit bis auf die Kopplung der beiden Seiten über die Drossel 38 der Funktion der Luftfederungsanlage 1 gemäß Fig. 4.

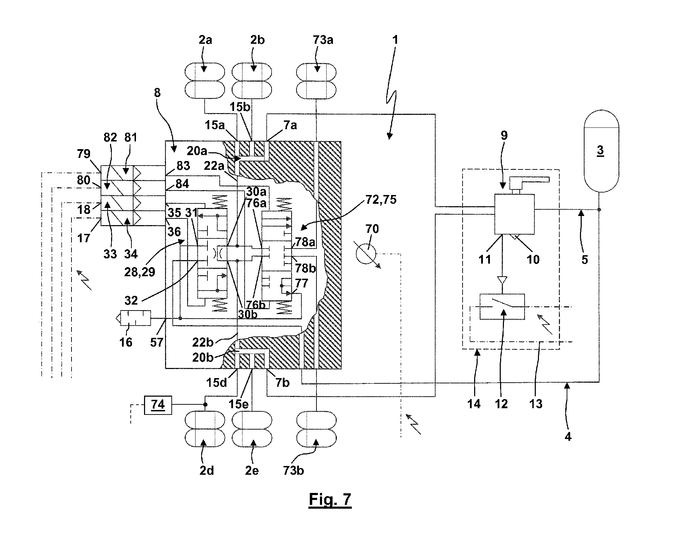

Für das Ausführungsbeispiel der Luftfederungsanlage 1 gemäß **Fig. 7** sind die Steueranschlüsse 17, 18, die Vorsteuerventile 33, 34, die Steuerleitungen 35, 36 und das Niveauregelventil 28 in Ausbildung als 4/3-Wegeventil 29 mit der Kopplung mit den Luftfederbälgen 2a, 2b, 2d, 2e und den Kopplungen der Versorgungsanschlüsse 7a, 7b über die Hebe-Senk-Ventileinheit 9 mit dem Vorratsbehälter 3 entsprechend dem Ausführungsbeispiel gemäß Fig. 4 ausgebildet. Allerdings verfügt hier die Niveauregelventileinheit 8 abweichend zu Fig. 4 nicht über ein Liftachsventil 39. Stattdessen ist in die Niveauregelventileinheit 8 eine Überschussachsventileinheit 72 integriert. Die Überschussachsventileinheit 72 dient der bedarfsgerechten Aktivierung von Luftfederbälgen 73 einer Überschussachse, welche lediglich ab einer bestimmten Beladung eine Achslast tragen soll. Die Überschussachsventileinheit 72 besitzt eine Sperrstellung, welche in Fig. 7 wirksam ist, in welcher eine Druckbeaufschlagung der Luftfederbälge 73 konstant gehalten wird. In einer Entlüftungsstellung der Überschussachsventileinheit 72 sind die Luftfederbälge 73 mit der Entlüftung 16 verbunden, so dass in dieser Betriebsstellung der Überschussachsventileinheit 72 die Luftfederbälge 73 entleert werden und keine Achslast tragen. Hingegen verbindet die Überschussachsventileinheit 72 in einer Belüftungsstellung die Luftfederbälge 73 der Überschussachse mit dem mindestens einen Anschluss 30 der Niveauregelventileinheit 28 bzw. mindestens einer Niveauregelleitung 22 oder einem Verteiler 20, was zur Folge hat, dass über die Überschussachsventileinheit 72 in dieser Schaltstellung die Luftfederbälge 2a, 2b, 2d, 2e sowie 73a, 73b pneumatisch miteinander verbunden werden, so dass sich die Achslast auf die den Luftfederbälgen 2a, 2b,2d, 2e zugeordneten Achsen sowie die Überschussachse verteilt. Zur bedarfsgerechten Umschaltung der Überschussachsventileinheit 72 in dieser Belüftungsstellung mit zunehmender Beladung und zunehmendem Druck in den Luftfederbälgen 2a, 2b, 2d, 2e kann der Druck an mindestens einem der Anschlüsse 15a, 15b, 15d, 15e, in mindestens einem Verteiler 20 oder in mindestens ein er Niveauregelleitung 22 über einen Drucksensor 74 erfasst werden. Überschreitet der Druck einen vorgegebenen Schwellwert, der mit dem Überschreiten einer vorgegebenen Beladung korreliert, überführt die Steuereinheit, welcher das Ausgangssignal des Drucksensors 74 zugeführt wird, die Überschussachsventileinheit 72 in die Belüftungsstellung, um die Überschussachse zur Wirkung zu bringen. Für das in Fig. 7 dargestellte Ausführungsbeispiel ist die Überschussachsventileinheit 72 als 5/3-Wegeventil 75 ausgebildet mit zwei eingangsseitigen Anschlüssen 76a, 76b, die pneumatisch mit den Anschlüssen 30a, 30b des Niveauregelventils 28 verbunden sind. Hierzu besitzen die Niveauregelleitungen 22a, 22b Verzweigungen, welche mit den Anschlüssen 76a, 76b verbunden sind. Ein Anschluss 77 des 5/3-Wegeventils 75 ist über den Anschluss 57 mit der Entlüftung 16 verbunden. Weitere Anschlüsse 78a, 78b sind jeweils mit einem Luftfederbalg 73a, 73b einer Seite der Überschussachse verbunden. In der in Fig. 7 wirksamen mittleren Schaltstellung des 5/3-Wegeventils 75 sind sämtliche Anschlüsse 76a, 76b, 78a, 78b und 77 gesperrt. Hingegen sind in der Entlüftungsstellung die Anschlüsse 76a, 76b weiterhin gesperrt, während über das 5/3-Wegenventil 75 die Anschlüsse 78a, 78b mit dem Anschluss 77 verbunden sind, so dass die Luftfederbälge 73 über die Entlüftung 16 entlüftet werden. In der Belüftungsstellung ist der Anschluss 77 abgesperrt, während der Anschluss 76a mit dem Anschluss 78a pneumatisch verbunden wird und der Anschluss 76b mit dem Anschluss 78b verbunden wird, was zur Folge hat, dass die Luftfederbälge 2a, 2b über das 5/3-Wegeventil 75 mit dem Luftfederbalg 73a gekoppelt werden, während die Luftfederbälge 2d, 2e mit dem Luftfederbalg 73b pneumatisch gekoppelt werden. Es versteht sich, dass auch eine Kopplung der unterschiedlichen Seiten mit den Luftfederbälgen 2a, 2b, 73a einerseits mit den Luftfederbälgen 2d, 2e, 73b der anderen Seite in der in Fig. 7 wirksamen Schaltstellung des Niveauregelventils 28 erfolgt über die dann wirksame Drossel. Für wirksame Überschussachse und Überschussachsventileinheit 72 in der Belüftungsstellung kann über das Niveauregelventil 28 gleichzeitig eine Niveauregelung der Luftfederbälge 2a, 2b, 2d, 2e sowie der Luftfederbälge 73a, 73b der Überschussachse erfolgen.

Auch die Überschussachsventileinheit 72 ist elektrisch angesteuert, hier mit elektropneumatischer Vorsteuerung. Über elektrische Anschlüsse 79, 80 werden von der Steuereinheit elektropneumatische Vorsteuerventile 81, 82 angesteuert, welche die Steuerdrücke in Steuerleitungen 83, 84 vorgeben. Für drucklose Steuerleitungen 83, 84 befindet sich infolge der Federn in der Überschussachsventileinheit 72 diese in der in Fig. 7 wirksamen Sperrstellung, während mit Druckbeaufschlagung der Steuerleitung 83 die Überschussachsventileinheit 72 umschaltbar ist in die Belüftungsstellung und mit Druckbeaufschlagung der Steuerleitung 84 die Überschussachsventileinheit 72 umschaltbar ist in die Entlüftungsstellung. Hierzu wirken die Steuerdrücke in den Steuerleitungen 83, 84 auf entsprechende Steuer- oder Kolbenflächen der Überschussachsventileinheit 72.

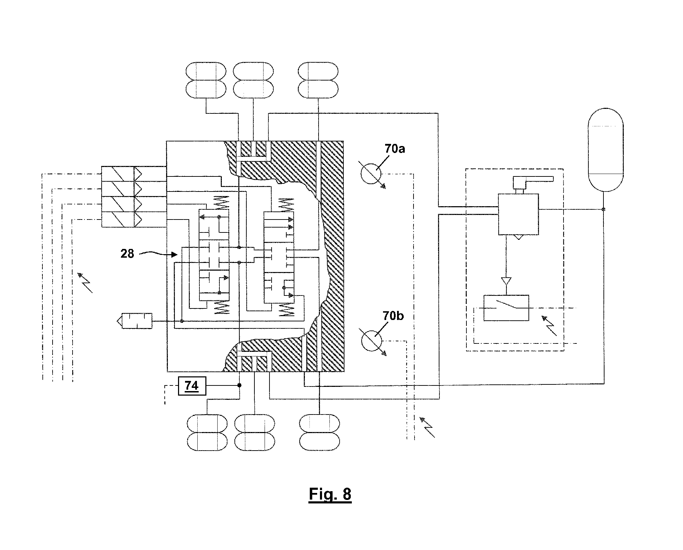

**Fig. 8** zeigt eine im Wesentlichen Fig. 7 entsprechende Ausgestaltung der Luftfederungsanlage 1, wobei hier allerdings die Kopplung der beiden Kreise über die Drossel des Niveauregelventils 28 entfallen ist und stattdessen in der in Fig. 8 wirksamen Schaltstellung die Anschlüsse 30a, 30b abgesperrt sind.

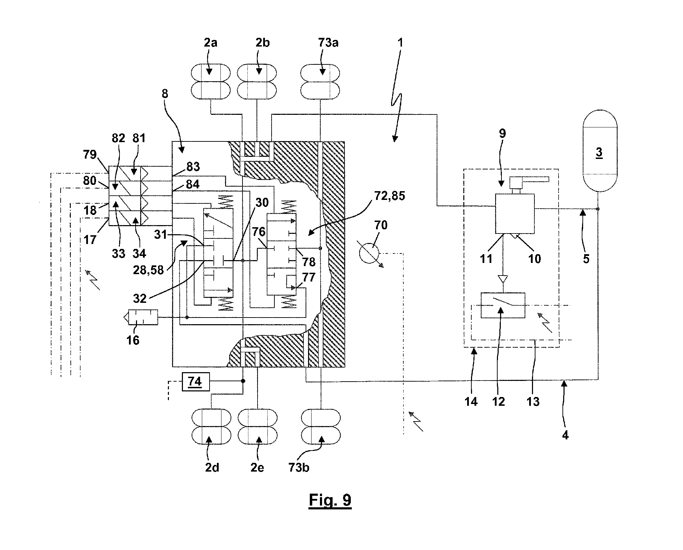

Für das Ausführungsbeispiel gemäß **Fig. 9** ist die Luftfederungsanlage 1 einkreisig ausgebildet mit einer Niveauregelventileinheit 8, die mit einem Niveauregelventil 28 entsprechend Fig. 6 ausgestattet ist. Hier ist die Überschussachsventileinheit 72 als 3/3-Wegeventil 85 ausgebildet, bei der der einzige eingangsseitige Anschluss 76 mit dem Anschluss 30 des Niveauregelventils 28 verbunden ist, also mit den Luftfederbälgen 2a, 2b, 2d, 2e beider Seiten des Fahrzeugs gekoppelt ist, während ausgangsseitig des 3/3-Wegeventils 85 der Anschluss 77 mit der Entlüftung 16 verbunden ist und der einzige Anschluss 78 mit den Luftfederbälgen 73a, 73b beider Seiten der Überschussachse gekoppelt ist. In der in Fig. 9 wirksamen Sperrstellung ohne Druckbeaufschlagung der Steuerleitungen 83, 84 sind sämtliche Anschlüsse 76, 77, 78 abgesperrt, während in der mit Druckbeaufschlagung der Steuerleitung 84 herbeigeführten Entlüftungsstellung der Anschluss 76 abgesperrt ist, während der Anschluss 78 mit dem Anschluss 77 pneumatisch verbunden ist und während mit Druckbeaufschlagung der Steuerleitung 83 die Belüftungsstellung herbeigeführt ist, in der der Anschluss 76 mit dem Anschluss 78 pneumatisch verbunden ist, während der Anschluss 77 abgesperrt ist. Die Funktion der Überschussachsventileinheit 72 entspricht im Wesentlichen der Funktion, wie diese in Fig. 8 beschrieben worden ist, wobei allerdings hier eine gemeinsame pneumatische Beaufschlagung und Entlüftung beider Seiten des Fahrzeugs erfolgen kann.

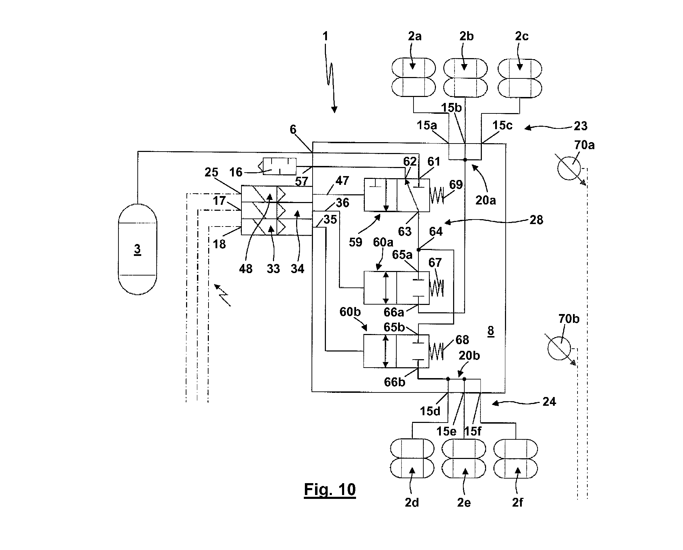

**Fig. 10** zeigt eine Luftfederungsanlage 1 in Ausbildung mit zwei Kreisen 23, 24 und ohne Liftachse und Liftachsventil 39 sowie ohne Überschussachse und Überschussachsventileinheit 72. Darüber hinaus ist in der Luftfederungsanlage 1 gemäß Fig. 10 keine Hebe-Senk-Ventileinheit 9 vorgesehen. In der Niveauregelventileinheit 8 ist das Niveauregelventil 28 mit einem 3/2-Wegeventil 59 und zwei 2/2-Wegeventilen 60a, 60b gebildet. Das 3/2-Wegeventil 59 besitzt einen Anschluss 61, der über einen Anschluss 6 mit dem Vorratsbehälter 3 verbunden ist, einen Anschluss 62, der über den Anschluss 59 mit der Entlüftung 16 verbunden ist, sowie einen Anschluss 63, der über eine Verzweigung 64 mit Anschlüssen 65a, 65b der 2/2-Wegeventile 60a, 60b verbunden ist. Die weiteren Anschlüsse 66a, 66b der 2/2-Wegeventile 60a, 60b sind jeweils über Verteiler 20a, 20b mit den Anschlüssen 15a-15c bzw. 15d-15e und den Luftfederbälgen 2a-2c bzw. 2d-2f verbunden. Infolge der Federn 67, 68, 69 befindet sich ohne pneumatische Ansteuerung das 3/2-Wegeventil 58 in einer Entlüftungsstellung, in welcher die Anschlüsse 62, 63 miteinander verbunden sind, während sich die 2/2-Wegeventile 60a, 60b in ihrer Sperrstellung befinden, in der die Anschlüsse 65a, 66a bzw. 65b, 66b voneinander getrennt sind. Über geeignete Gestaltung der Steuersignale an den Anschlüssen 17, 18, 25 und die Vorsteuerventile 33, 34, 48 kann der Druck in Steuerleitungen 35, 36, 47, die die 2/2-Wegeventile 60b, 60a und das 3/2-Wegeventil 59 ansteuern, beeinflusst werden. Mit pneumatischer Beaufschlagung der Steuerleitung 47 kann das 3/2-Wegeventil 59 in eine Belüftungsstellung umgeschaltet werden, in welcher der Anschluss 61 mit dem Anschluss 63 verbunden wird. Mit pneumatischer Beaufschlagung der Steuerleitung 35 bzw. 36 kann das 2/2-Wegeventil 60b bzw. 60a von der in Fig. 10 wirksamen Sperrstellung in die Durchlassstellung umgeschaltet werden, in welcher dieses den Anschluss 65a bzw. 65b mit dem Anschluss 66a bzw. 66b verbindet.

Die Luftfederungsanlage 1 gemäß Fig. 10 ermöglicht insbesondere die folgenden Betriebsstellungen:
- Ohne pneumatische Beaufschlagung der Steuerleitungen 35, 36, 47 befindet sich die Luftfederungsanlage in dem in Fig. 10 skizzierten Betriebszustand, in dem über die 2/2-Wegeventile 60a, 60b die Luftfederbälge 2a-2f abgesperrt sind, so dass das Druckniveau in diesen Luftfederbälgen 2a-2f konstant gehalten wird.
- Durch selektive, alternative oder kumulative Druckluftbeaufschlagung der Steuerleitungen 35, 36 über elektrische Bestromung der Anschlüsse 18, 25 kann eines oder können beide 2/2-Wegeventile 60a, 60b in die Durchlassstellung geschaltet werden, in welcher ohne Druckbeaufschlagung der Steuerleitung 47 der dem in Durchlassstellung geschalteten 2/2-Wegeventil zugeordnete Kreis 23, 24 entlüftet wird.
- Mit pneumatischer Druckbeaufschlagung der Steuerleitung 47 kann das 3/2-Wegeventil 59 in seine Belüftungsstellung umgeschaltet werden, für welche ein 2/2-Wegeventil 60a, 60b in Durchlassstellung bewirkt, dass der zugeordnete Kreis 23, 24 belüftet wird, was mit einem Anheben des Niveaus einhergeht.

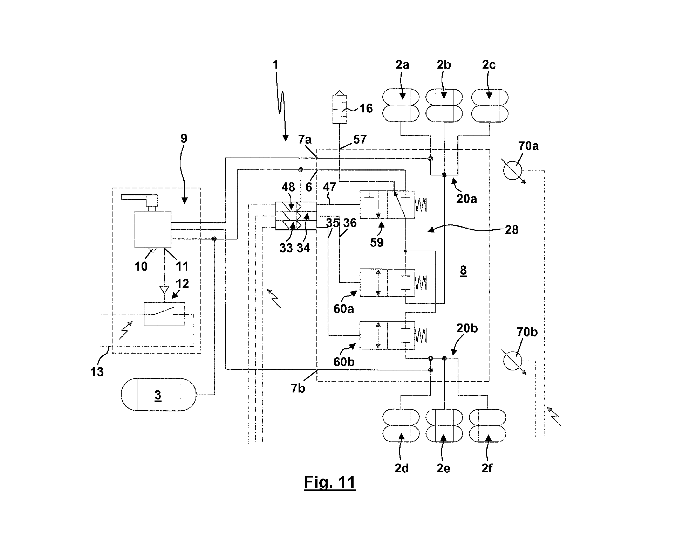

Bei dem Ausführungsbeispiel der Luftfederungsanlage 1 gemäß **Fig. 11** ist im Wesentlichen die Niveauregelventileinheit 8 entsprechend der Niveauregelventileinheit 8 gemäß Fig. 10 ausgebildet. Allerdings verfügt diese hier über die Versorgungsanschlüsse 7a, 7b, über welche die Niveauregelventileinheit 8 mit der Hebe-Senk-Ventileinheit 9 pneumatisch verbunden ist. Die Anschlüsse 7a, 7b sind jeweils mit den Verteilern 20a, 20b pneumatisch im Inneren der Niveauregelventileinheit 8 verbunden, so dass je nach Stellung der Hebe-Senk-Ventileinheit 9 die Luftfederbälge 2a, 2b, 2c bzw. 2d, 2e, 2f be- und entlüftet sowie abgesperrt werden können.

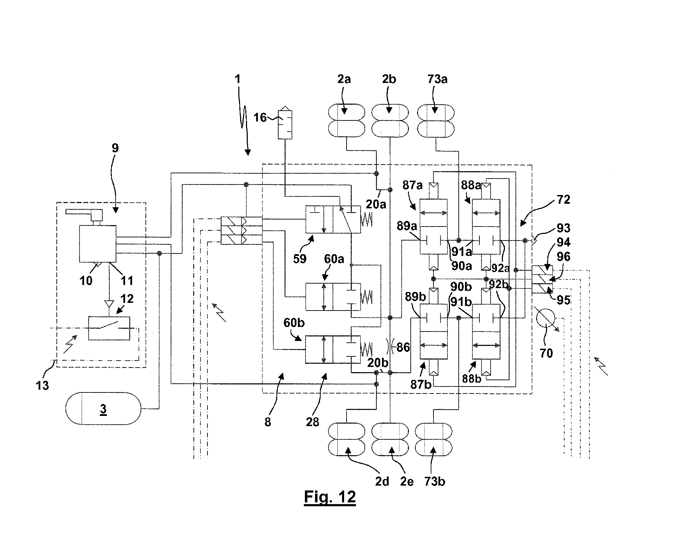

Das Ausführungsbeispiel der Luftfederungsanlage 1 gemäß **Fig. 12** entspricht grundsätzlich dem Ausführungsbeispiel gemäß Fig. 11. Allerdings besitzt hier die Luftfederungsanlage 1 Luftfederbälge 73a, 73b, welche einer Überschussachse zugeordnet sind. In die Niveauregelventileinheit 8 ist hier eine Überschussachsventileinheit 72 integriert. Des Weiteren sind hier die beiden Kreise über eine Drossel 86 miteinander gekoppelt.

Gemäß Fig. 12 ist die Überschussachsventileinheit 72 mit vier Überschussachsventilen 87a, 87b und 88a, 88b jeweils in Ausbildung als Sperrventil oder 2/2-Wegeventil gebildet. Die Überschussachsventile 87a, 87b bilden jeweils einem Kreis und einer Seite der Überschussachse zugeordnete Belüftungsventile mit jeweils einem Anschluss 89a, 89b, der pneumatisch verbunden ist mit einem Anschluss 66a bzw. 66b des 2/2-Wegeventils 60a bzw. 60b. Für das dargestellte Ausführungsbeispiel erfolgt diese pneumatische Verbindung über eine Verzweigung der Verbindungsleitung der Anschlüsse 66a, 66b mit den Verteilern 20a, 20b. Der andere Anschluss 90a, 90b der Überschussachsventile 87a, 87b ist pneumatisch verbunden mit dem zugeordneten Luftfederbalg 73a, 73b. In der in Fig. 12 wirksamen Sperrstellung der Überschussachsventile 87a, 87b sind die Luftfederbälge 73a , 73b der Überschussachse pneumatisch entkoppelt von den Luftfederbälgen 2a, 2b, 2d, 2e der ständig eine Achslast tragenden Achsen, während mit Überführung der Überschussachsventile 87a, 87b in ihre Durchlassstellung die Luftfederbälge 2a, 2b, 73a über das Überschussachsventil 87a pneumatisch miteinander verbunden sind, während die Luftfederbälge 2d, 2e über das Überschussachsventil 87b mit dem Luftfederbalg 73b pneumatisch verbunden sind. Dies hat zur Folge, dass eine gleichmäßige Verteilung der Achslasten auf die den Luftfederbälgen 2a, 2b, 2d, 2e zugeordneten Achsen sowie die Überschussachse mit den Luftfederbälgen 73a, 73b erfolgen kann. Über eine Verzweigung der Verbindungsleitung zwischen den Anschlüssen 90a, 90b mit den Luftfederbälgen 73a, 73b sind die Luftfederbälge 73a, 73b auch mit Anschlüssen 91 a, 91 b der Überschussachsventile 88a, 88b verbunden. Der andere Anschluss 92a, 92b der Überschussachsventile 88a, 88b ist mit einer Entlüftung 93 verbunden. In der in Fig. 12 wirksamen Sperrstellung der Überschussachsventile 88a, 88b kann keine Entlüftung der Luftfederbälge 73a, 73b über die Entlüftung 93 erfolgen, während mit Umschaltung der Überschussachsventile 88a, 88b in die Durchlassstellung die Luftfederbälge 73a, 73b entlüftet werden, womit diese keine Achslast tragen können. Für die Ansteuerung der Überschussachsventile 87a, 87b, 88a, 88b sind elektropneumatische Vorsteuerventile 94, 95, 96 vorgesehen, die elektrisch über die Steuereinheit angesteuert werden. Die von dem Vorsteuerventil 94 angesteuerte Steuerleitung ist verbunden mit Steueranschlüssen der Überschussachsventile 87a, 87b, so dass mit Druckbeaufschlagung dieser Steuerleitung beide Überschussachsventile 87a, 87b von der Sperrstellung in die Durchlassstellung umschaltbar sind. Entsprechend verzweigt eine von dem Vorsteuerventil 95 angesteuerte Steuerleitung zu Steueranschlüssen der Überschussachsventile 88a, 88b, so dass mit Druckbeaufschlagung dieser Steuerleitungen und Steueranschlüsse die beiden Überschussachsventile 88a, 88b gemeinsam von der Sperrstellung in die Durchlassstellung umschaltbar sind. Mittels des Vorsteuerventils 96 wird der Steuerdruck in einer Steuerleitung beeinflusst, die mit Steueranschlüssen sämtlicher Überschussachsventile 87a, 87b, 88a, 88b verbunden ist und über die diese von der Durchlassstellung gemeinsam in die Sperrstellung umschaltbar sind. Vorzugsweise handelt es sich bei den Überschussachsventilen 87a, 87b, 88a, 88b um "multistabile" Ventile, die eine einmal eingenommene Betriebsstellung ohne Anlegen eines Steuerdrucks beibehalten. Dies hat zur Folge, dass die Vorsteuerventile 94, 95, 96 lediglich kurzzeitige Steuerimpulse in den zugeordneten Steuerleitungen herbeiführen müssen, um anschließend an diesen Steuerimpuls dauerhaft eine veränderte Betriebsstellung herbeiführen zu können. Es versteht sich, dass beliebige anderweitige Ausgestaltungen und Steuerungen für die Ventile möglich sind.

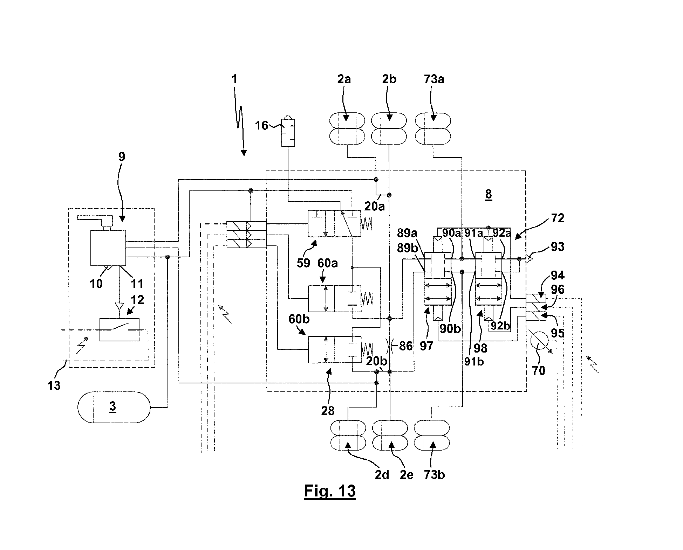

Für das in **Fig. 13** dargestellte Ausführungsbeispiel der Luftfederungsanlage 1 ist bei ansonsten Fig. 12 entsprechender Ausgestaltung die Überschussachsventileinheit 72 mit zwei Überschussachsventilen 97, 98 gebildet. Die Überschussachsventile 97, 98 sind jeweils als 4/2-Wegeventile ausgebildet. Das für eine Belüftung zuständige Überschussachsventil 97 besitzt hier beide mit den 2/2-Wegeventilen 60a, 60b verbundenen Anschlüsse 89a, 89b sowie die Anschlüsse 90a, 90b, welche mit den Luftfederbälgen 73a, 73b verbunden sind. In der in Fig. 13 wirksamen Sperrstellung sind sämtliche Anschlüsse 89a, 89b, 90a, 90b abgesperrt, während in der Durchlassstellung der Anschluss 89a mit dem Anschluss 90a pneumatisch verbunden ist und der Anschluss 89b mit dem Anschluss 90b pneumatisch verbunden ist. Dies hat zur Folge, dass letztendlich die Luftfederbälge 2a, 2b mit dem Luftfederbalg 73a pneumatisch verbunden sind und die Luftfederbälge 2d, 2e pneumatisch mit dem Luftfederbalg 73b verbunden sind. Das Überschussachsventil 98 besitzt die beiden Anschlüsse 91 a, 91 b, die mit den Luftfederbälgen 73a, 73b verbunden sind, sowie die beiden Anschlüsse 92a, 92b, die mit der Entlüftung 93 verbunden sind. In der in Fig. 13 wirksamen Sperrstellung des Überschussachsventils 98 kann keine Entlüftung der Luftfederbälge 73a, 73b über die Entlüftung 93 erfolgen, während in der Durchlassstellung die Luftfederbälge 73a, 73b über das Überschussachsventil 98 und die Entlüftung 93 entlüftet werden. Das Vorsteuerventil 94 erzeugt einen Steuerdruck in einer Steuerleitung, die mit Anschlüssen beider Überschussachsventile 97, 98 derart verbunden ist, dass mit Druckbeaufschlagung der Steuerleitung eine Umschaltung der Überschussachsventile 97, 98 von der Durchlassstellung in die Sperrstellung erfolgt. In diesem Fall ist das Vorsteuerventil 95 für einen Steuerdruck in einer Steuerleitung zuständig, welche ausschließlich mit einem Steueranschluss des Überschussachsventils 97 verbunden ist. Mit Druckbeaufschlagung dieser Steuerleitung erfolgt eine Umschaltung des Überschussachsventils 97 von der Sperrstellung in die Durchlassstellung. Das Vorsteuerventil 96 beeinflusst einen Steuerdruck in einer Steuerleitung, die ausschließlich mit einem Steueranschluss des Überschussachsventils 98 verbunden ist. Mit Druckbeaufschlagung dieser Steuerleitung erfolgt eine Umschaltung des Überschussachsventils 98 von der Sperrstellung in die Durchlassstellung. Somit bildet Fig. 13 eine abgewandelte Ausführungsform der Überschussachsventileinheit 72 gegenüber dem Ausführungsbeispiel gemäß Fig. 12, indem hier anstelle der vier 2/2-Wegeventile lediglich zwei 4/2-Wegeventile eingesetzt sind, ohne dass sich zwingend eine grundsätzlich veränderte Funktionalität ergeben muss.

### BEZUGSZEICHENLISTE

- 1: Luftfederungsanlage
- 2: Luftfederbalg
- 3: Vorratsbehälter
- 4: Leitungszweig
- 5: Leitungszweig
- 6: Versorgungsanschluss
- 7: Versorgungsanschluss
- 8: Niveauregelventileinheit
- 9: Hebe-Senk-Ventileinheit
- 10: Entlüftung
- 11: Auslass
- 12: Druckschalter
- 13: Ausgangssignal
- 14: Baueinheit
- 15: Anschluss
- 16: Entlüftung
- 17: elektr. Steueranschluss
- 18: elektr. Steueranschluss
- 19: Zentralleitung
- 20: Verteiler
- 21: Stichleitung
- 22: Niveauregelleitung
- 23: Kreis
- 24: Kreis
- 25: elektr. Steueranschluss
- 26: Tragbalg
- 27: Liftbalg
- 28: Niveauregelventil
- 29: 4/3-Wegeventil
- 30: Anschluss
- 31: Anschluss
- 32: Anschluss
- 33: Vorsteuerventil
- 34: Vorsteuerventil
- 35: Steuerleitung
- 36: Steuerleitung
- 37: Feder
- 38: Drossel
- 39: Liftachsventil
- 40: 6/2-Wegeventil
- 41: Anschluss
- 42: Anschluss
- 43: Anschluss
- 44: Anschluss
- 45: Anschluss
- 46: Feder
- 47: Steuerleitung
- 48: Vorsteuerventil
- 49: Anschluss
- 50: Anschluss
- 51: Niveauregelmodul
- 52: Liftachsmodul
- 53: Schnittstelle
- 54: Leitungsverbindung
- 55: Leitungsverbindung
- 56: Leitungsverbindung
- 57: Anschluss
- 58: 3/3-Wegeventil
- 59: 3/2-Wegeventil
- 60: 2/2-Wegeventil
- 61: Anschluss
- 62: Anschluss
- 63: Anschluss
- 64: Verzweigung
- 65: Anschluss
- 66: Anschluss
- 67: Feder
- 68: Feder
- 69: Feder
- 70: Wegsensor
- 71: Drossel
- 72: Überschussachsventileinheit
- 73: Luftfederbalg
- 74: Drucksensor
- 75: 5/3-Wegeventil
- 76: Anschluss
- 77: Anschluss
- 78: Anschluss
- 79: Anschluss
- 80: Anschluss
- 81: Vorsteuerventil
- 82: Vorsteuerventil
- 83: Steuerleitung
- 84: Steuerleitung
- 85: 3/3-Wegeventil
- 86: Drossel
- 87: Überschussachsventil
- 88: Überschussachsventil
- 89: Anschluss
- 90: Anschluss
- 91: Anschluss
- 92: Anschluss
- 93: Entlüftung
- 94: Vorsteuerventil
- 95: Vorsteuerventil
- 96: Vorsteuerventil
- 97: Überschussachsventil
- 98: Überschussachsventil

## Patentansprüche

1. Niveauregelventileinheit (8) für eine Luftfederungsanlage (1) eines Nutzfahrzeugs mit
a) mindestens einem Versorgungsanschluss (6; 7),
b) mindestens einem elektrischen Anschluss (17; 18; 25), über welchen mindestens ein Steuersignal für eine rein elektrische Niveauregelung übertragen wird,
c) mindestens einem elektrisch angesteuerten oder vorgesteuerten Ventil (28; 29; 39; 40; 58;59; 60),
d) mindestens einem integrierten Verteiler (20), der eine Zentralleitung (19) mit Stichleitungen (21) verbindet, sowie
e) mit dem integrierten Verteiler (20) verbundenen pneumatischen Anschlüssen (15) zu Luftfederbälgen (2), deren Druckluftniveau von der Niveauregelventileinheit (8) elektrisch gesteuert wird.

2. Niveauregelventileinheit (8) nach Anspruch 1, **dadurch gekennzeichnet, dass** die Niveauregelventileinheit (8) eine Schaltstellung besitzt, in welcher der Versorgungsanschluss (6) über den Verteiler (20) mit Anschlüssen (15) von Luftfederbälgen (2) verbunden ist.

3. Niveauregelventileinheit (8) nach Anspruch 1 oder 2, **dadurch gekennzeichnet, dass** die Niveauregelventileinheit (8) zweikreisig ausgebildet ist und zwei Verteiler (20a; 20b) besitzt, die jeweils mit den Anschlüssen (15a-15c; 15d-15f) von Luftfederbälgen (2a-2c; 2d-2e) eines Kreises (23; 24) verbunden sind.

4. Niveauregelventileinheit (8) nach Anspruch 3, **dadurch gekennzeichnet, dass** zwei Versorgungsanschlüsse (7a; 7b) vorgesehen sind, welche jeweils mit einem Verteiler (20a; 20b) und den Luftfederbälgen (2a-2c; 2d-2e) eines zugeordneten Kreises (23; 24) verbindbar sind.

5. Niveauregelventileinheit (8) nach einem der Ansprüche 3 und 4, **dadurch gekennzeichnet, dass** ein Niveauregelventil (28) in Ausgestaltung als 4/3-Wegeventil (29) vorgesehen ist mit
a) zwei Anschlüssen (30a; 30b), die jeweils über einen Verteiler (20a; 20b) mit Luftfederbälgen (2a-2c; 2d-2e) eines Kreises (23; 24) verbunden sind,
b) einem Anschluss (31), der mit einer Entlüftung (16) verbunden ist,
c) einem Anschluss (32), der mit einem Versorgungsanschluss (6) verbunden ist,
d) einer Schaltstellung, in welcher die beiden Anschlüsse (30a; 30b), die jeweils über einen Verteiler (20a; 20b) mit Luftfederbälgen (2a-2c; 2d-2e) eines Kreises (23; 24) verbunden sind, über eine Drossel (38) miteinander verbunden sind,
e) einer Schaltstellung, in welcher die beiden Anschlüsse (30a; 30b), die jeweils über einen Verteiler (20a; 20b) mit Luftfederbälgen (2a-2c; 2d-2e) eines Kreises (23; 24) verbunden sind, mit der Entlüftung (16) verbunden sind und
f) einer Schaltstellung, in welcher die beiden Anschlüsse (30a; 30b), die jeweils über einen Verteiler (20a; 20b) mit Luftfederbälgen (2a-2c; 2d-2e) eines Kreises (23; 24) verbunden sind, mit dem Versorgungsanschluss (6) verbunden sind.

6. Niveauregelventileinheit (8) nach einem der Ansprüche 3 und 4, **dadurch gekennzeichnet, dass** ein Niveauregelventil (28) in Ausgestaltung als 3/3-Wegeventil (58) vorgesehen ist mit
a) einem Anschluss (30), der mit sämtlichen Luftfederbälgen (2a-2f) verbunden ist,
b) einem Anschluss (31), der mit einer Entlüftung (16) verbunden ist,
c) einem Anschluss (32), der mit einem Versorgungsanschluss (6) verbunden ist,
d) einer Schaltstellung, in welcher der Anschluss (30), der mit sämtlichen Luftfederbälgen (2a-2f) verbunden ist, abgesperrt ist,
e) einer Schaltstellung, in welcher der Anschluss (30), der mit sämtlichen Luftfederbälgen (2a-2f) verbunden ist, mit der Entlüftung (16) verbunden ist und
f) einer Schaltstellung, in welcher der Anschluss (30), der mit sämtlichen Luftfederbälgen (2a-2f) verbunden ist, mit einem Versorgungsanschluss (6) verbunden ist.

7. Niveauregelventileinheit (8) nach einem der Ansprüche 3 und 4, **dadurch gekennzeichnet, dass** ein Niveauregelventil (28) in Ausgestaltung mit einem 3/2-Wegeventil (59) vorgesehen ist mit
a) einem Anschluss (63), der über mindestens einen Verteiler (20a; 20b) mit Luftfederbälgen (2a-2c; 2d-2e) verbunden ist,
b) einem Anschluss (61), der mit einem Versorgungsanschluss (6) verbunden ist,
c) einem Anschluss (62), der mit einer Entlüftung (16) verbunden ist,
d) einer Schaltstellung, in welcher der mit den Luftfederbälgen (2) verbundene Anschluss (63) mit dem Versorgungsanschluss (6) verbunden ist und
e) einer Schaltstellung, in welcher der mit den Luftfederbälgen (2) verbundene Anschluss (63) mit der Entlüftung (16) verbunden ist.

8. Niveauregelventileinheit (8) nach Anspruch 7, **dadurch gekennzeichnet, dass** ein Niveauregelventil (28) mit dem 3/2-Wegeventil (59) und einem 2/2-Wegeventil (60) ausgebildet ist.

9. Niveauregelventileinheit (8) nach Anspruch 8, **dadurch gekennzeichnet, dass** ein Niveauregelventil mit dem 3/2-Wegeventil (59) und zwei 2/2-Wegeventilen (60a; 60b) ausgebildet ist, wobei die 2/2-Wegeventile (60a; 60b) jeweils über einen Verteiler (20a; 20b) mit Luftfederbälgen (2a-2c; 2d-2f) eines Kreises (23; 24) verbunden sind.

10. Niveauregelventileinheit (8) nach einem der vorhergehenden Ansprüche, **dadurch gekennzeichnet, dass** ein Liftachsventil (39) in die Niveauregelventileinheit (8) integriert oder an diese anflanschbar ist.

11. Niveauregelventileinheit (8) nach Anspruch 10, **dadurch gekennzeichnet, dass** das Liftachsventil (39) als 6/2-Wegeventil (40) ausgebildet ist mit
a) einem Anschluss (42), der mit einem Verteiler (20a) verbunden ist,
b) einem Anschluss (44), der mit einem Liftbalg (50) verbunden ist,
c) mindestens einem Anschluss (43a; 43b), der mit einem Tragbalg (26a; 26b) verbunden ist,
d) einer Schaltstellung, in welcher der Liftbalg (50) mit einem Versorgungsanschluss (6) verbunden ist, mindestens ein Tragbalg (26a; 26b) mit einer Entlüftung (16) verbunden ist und der mit dem Verteiler (20a) verbundene Anschluss (42) gesperrt ist, sowie
e) einer Schaltstellung, in welcher der Liftbalg (50) mit der Entlüftung (16) verbunden ist und mindestens ein Tragbalg (26a; 26b) mit dem Verteiler (20a) verbunden ist.

12. Niveauregelventileinheit (8) nach einem der vorhergehenden Ansprüche, **dadurch gekennzeichnet, dass** mindestens ein Ventil (28, 29; 39; 40) als elektropneumatisch vorgesteuertes Ventil ausgebildet ist.

13. Niveauregelventileinheit (8) nach einem der vorhergehenden Ansprüche 10 bis 12, **dadurch gekennzeichnet, dass** die Niveauregelventileinheit (8) modular ausgebildet ist mit einem Niveauregelmodul (51) und einem Liftachsmodul (52).

14. Niveauregelventileinheit (8) nach einem der vorhergehenden Ansprüche, **dadurch gekennzeichnet, dass** in die Niveauregelventileinheit (8) eine Überschussachsventileinheit (72), insbesondere mit einem 5/3-Wegeventil (75), einem 3/3-Wegeventil (85) oder mit Überschussachsventilen (87a, 87b, 88a, 88b; 97, 98) in Ausgestaltung als 2/2-Wegeventile oder als 4/2-Wegeventile, integriert ist.

15. Luftfederungsanlage (1) mit einer Niveauregelventileinheit (8) nach einem der vorhergehenden Ansprüche und einer zwischen eine Druckluftquelle (Vorratsbehälter 3) und mindestens einen Versorgungsanschluss (7a; 7b) der Niveauregelventileinheit (8) zwischengeschalteten manuell betätigbaren Hebe-Senk-Ventileinheit (9).

16. Luftfederungsanlage (1) nach Anspruch 15 in Rückbeziehung auf einen der Ansprüche 3 bis 14, **dadurch gekennzeichnet, dass** die Hebe-Senk-Ventileinheit (9) zwei Anschlüsse besitzt, die jeweils mit einem Versorgungsanschluss (7a; 7b) der Niveauregelventileinheit (8) verbunden sind.

17. Luftfederungsanlage (1) nach Anspruch 15 oder 16, **dadurch gekennzeichnet, dass**
a) die Hebe-Senk-Ventileinheit (9) mit einem Druckschalter (12) oder Drucksensor pneumatisch gekoppelt ist oder in die Hebe-Senk-Ventileinheit (9) ein Druckschalter (12) oder Drucksensor integriert ist, welcher in Abhängigkeit einer manuell vorgegebenen Betriebsstellung der Hebe-Senk-Ventileinheit (9) ein elektrisches Signal erzeugt, und
b) eine Steuereinheit vorhanden ist mit Steuerungslogik zur Ansteuerung der Niveauregelventileinheit (8) in Abhängigkeit des von dem Druckschalter (12) erzeugten elektrischen Signals.
